# EUROPEAN PATENT SPECIFICATION

(11) **EP 2 582 115 B1**
(45) Date of publication and mention of the grant of the patent: **09.12.2015**
(21) Application number: 12188046.2
(22) Date of filing: 10.10.2012
(51) Int. Cl.: H04L 29/06

(54) **A qualified electronic signature system, associated method and mobile phone device for a qualified electronic signature**
Qualifiziertes Signatursystem, zugehöriges Verfahren und Endgerätvorrichtung für die qualifizierte elektronische Signatur
Système de signature électronique qualifiée, procédé associé et dispositif terminal pour une signature électronique qualifiée

(30) Priority: 10.10.2011 IT TO20110902
(43) Date of publication of application: 17.04.2013
(73) Proprietor: Itside S.r.l., 20011 Corbetta (MI) (IT)
(72) Inventor: Bonsignore, Antonio Salvatore, I-20011 Corbetta (MI) (IT)
(74) Representative: Zanoli, Enrico

(56) References cited:
- WO-A1-01/49054
- Martin Whitehead: "GSMA Europe response to European Commision consultation on eSignatures and eIdentification", GSMA Europe , 15 April 2011 (2011-04-15), XP002683918, Retrieved from the Internet: URL:http://ec.europa.eu/information_societ y/policy/esignature/docs/pub_cons/offline_ contrib/gsma.pdf [retrieved on 2012-09-17]

## Description

The present invention relates to a Qualified Electronic Signature (QES) system configured to exchange data with first processing means of the requester configured to allow a requester to generate requests requesting a qualified electronic signature through said system to a recipient, said system comprising second processing means of the recipient configured to allow the recipient of the request to sign with his qualified electronic signature, said second processing means comprising a mobile phone device for qualified electronic signature of mobile type, adapted to exchange text-based communications on mobile telecommunications networks on the basis of an identifier of the recipient subscribing to the mobile telephone service comprised in a Subscriber Identity Module with which he/she is associated.

The identity is commonly certified by signing paper documents with handwritten signatures. For reasons of efficiency and practicality today it is often preferable to operate on the network, in particular the Internet, in a digital manner; however the user must be identified with certainty to allow access to sensitive data and to services on the network, payment orders, authorizations and subscriptions in electronic format.

Typically, access to network services takes place by means of the use of a pair of digital identification parameters, such as username and password, known to the user to which these identification parameters were assigned. These identification parameters are also present in a database of the related service being accessed by the user. This solution is vulnerable in terms of security due to the relative ease with which these parameters can be intercepted on the network to take the place of the authorized physical user. Moreover, the presence of these parameters within a database exposes them to a copy effected through a hacker attack, with consequent theft and use of the digital identity. The increasing use of network services also multiplies for each user the identifier parameters to remember, representing a usability problem that is not to be underestimated.

A more advanced type of digital identification is represented by the use of OTP (One Time Password) devices. In this case, in addition to username and password, the user is typically in possession of a device which, following interrogation, supplies a code to be added as additional and temporary password valid only for that operation and which expires rapidly. The device calculates this code through an algorithm based on the current time and on an alphanumeric code (seed) saved in the device, but also in a central database, with consequent risk of a hacker attack.

The use of OTP devices only partly satisfies a requirement expressed typically by the banking sector according to which, for greater security, the user should be authenticated both through information known to him (such as username and password) and through a device possessed by the user. In fact, the OTP device does not actually correspond to something unique possessed by the user, as the information (temporary password) linked to this device is actually information that can be replicated. The home banking systems most widely used today make use of this technology.

Another form of digital identity authentication in the sphere of electronic payments is represented by credit card codes. These codes are relatively easy to copy by expert hackers or more simply in points of sale. To make up for this vulnerability, some e-commerce circuits use a further password and request the reply to further questions concerning additional information of the user, to be able to produce a payment authorization. Therefore, it is necessary to remember anew password, although without excluding the risks of information being copied by hackers.

Another form of digital identity authentication is represented by the use of PKI (Public Key Infrastructure) technology and electronic signatures based on unprotected private keys. In these solutions the private key is filed in an area, such as the client's file system, which does not usually have a high level of protection, in particular is not certified against extraction of the private key, and therefore copies can be made of the same private key. In the literature, signatures signed through this technology are called electronic signatures and at times digital signatures. Also in this case the possibility of making copies of the private key undermines the security of the solution. In fact, the private key is used to implement the signature algorithm and, if copied, compromises the security of the solution.

Other forms of digital identity authentication use the qualified electronic signature, as defined, for example, in the Digital administration code (Law Decree 30 December 2010, no. 235) and in European Directive 1999/99/EC, usually through the use of client computers where typically it is necessary to install USB token or smartcard devices with related reader. These devices are certified according to the national and international security levels required to ensure that the private key is impossible to copy. These devices ensure digital identity authentication with a high level of security through the implementation of a qualified electronic signature. The algorithm used is of asymmetric type, to ensure a high level of security. However, USB tokens and smartcards with related reader must be installed on a client computer and require maintenance. Moreover, in this case identity authentication usually requires the use of a personal computer type processor which, even if portable, limits use in mobility.

Forms of authentication that use mobile telephones or smartphones as a medium to ensure digital identity in mobility are also known.

Some of these solutions are based on private keys or digital certificates filed in repositories, i.e. storage modules, which are not certified against extraction of the private key.

Some mobile solutions use symmetric keys for identification, signature and encryption and therefore have a limited level of security.

Other mobile solutions are based on the use of a Security or Secure Element incorporate in the mobile telephone or smartphone that limits the use to specific models, without ensuring the use of certified repositories against copying of the private key.

In some solutions, the information present in the Secure Element does not correspond to the private key, but to the credit card number or equivalent in cash available for payments from a mobile device.

In some cases the electronic signature process takes place remotely and typically through Hardware Security Module (HSM) certified server signature devices; in this case, to activate the signature process an activation PIN (Personal Identification Number) must be sent through the mobile telephone and/or an OTP device; regardless of how secure the channel used to send the PIN is, it is transmitted on the network, reducing the security of the solution.

Some solutions are based on the use of the SIM as certified device for qualified electronic signature, but in this case the telephone carrier and the banks must reach an agreement on methods, protocols and revenue. This is necessary because the party that manages the SIM, usually the telephone carrier, is in fact the owner. This type of solution is described in the paper by Martin Whitehead, "GSMA Europe response to European Commission consultation on eSignatures and eIdentification", GSMA Europe (2011-04-15), XP002683918.

This solution is difficult to put into practice as for a satisfactory user experience the bank offering payment services to the generic user must have an agreement with the user's carrier, as it is unlikely that the user will change carrier or, vice versa, change bank. This process is not simple to launch on the market due to the number of subjects involved, both on the bank side and on the carrier side.

Some mobile solutions, not based on qualified electronic signature, exclude banks, limiting payments in cases in which telephone carriers can operate autonomously, such as in the case of purchase of digital contents, typically deducting these from the telephone credit.

An object of the present invention is to provide a system that allows a signer to sign digitally the requests sent by a requester through the system. In particular, the system allows the signer, as the recipient of a payment request or subscription request through signing or of secure access to network services, for example, to operate in security through a qualified electronic signature using his own mobile telephone.

With the term "signer" it is intended, in the present description, a person, a company or other physical or not physical recipient provided with an electronic identity and able to sign documents, and requests in general, via qualified electronic signature or not qualified electronic signature. In the present invention the terms "signer" and "recipient" correspond to the same entity.

According to the present invention, this object is achieved through a qualified electronic signature system having the characteristics specified in the appended claims.

The invention also relates to a corresponding qualified electronic signature procedure, and to a terminal device operating in this system according to the invention for the qualified electronic signature of a mobile type.

In short, this invention relates to a qualified electronic signature system with digital identity certification, implemented on a mobile phone device to produce the qualified electronic signature by a recipient of a request to be signed digitally.

This telephone device to produce the qualified electronic signature is a mobile telephone provided with an operating system, in particular a smartphone, which provides for the use of a security memory and an application, installed on this mobile telephone or on this installed security memory, configured to operate with this security memory. The security memory is usually installed on a removable medium, which allows it to be housed in a removable manner in the mobile telephone to be able to effect, in particular through said application, the qualified electronic signature operations using the private key of the signer. Thus, the security memory can be installed on a memory support that can be removed and inserted into the smartphone in a slot that is different from a slot of the UICC (Universal Integrated Circuit Card)/uSIM (Universal Subscriber Identity Module)/SIM (Subscriber Identity Module). In fact, the security memory is not an UICC/uSIM/SIM or part of there, has different shape and dimension, and is independent from the Mobile Network Operator (MNO) chosen by the smartphone user and from the Mobile Network like GSM/UMTS Network.

Usually, the security memory can be used in a support (or slot) suitable for a common microSD but it is not a simple SD memory. The security memory has at least a security partition to implement a double function: a first partition that is the security part of the memory, is able to perform qualified electronic signature, keep and protect signature private keys against extraction; the other partitions are common storage partition able to store a larger quantity of generic data (2GB or more). In this way, the security memory has a storage dimension larger than an UICC/uSIM/SIM. A security memory like this, called Mobile Security Card, has been recently produced by Giesecke & Devrient.

The security memory comprises at least a secure partition in which at least the private key of the signer is stored.

The security memory is different from the Subscriber Identity Module (SIM) but is accessible by the mobile phone device in combination with the Subscriber Identity Module identifier of the signer with which the security memory is associated when data are exchanged through a mobile telecommunication networks. The security memory can be accessible also in combination with electronic data exchanged via proximity networks, by proximity devices on the mobile phone.

The electronic signature is performed in the security partition of the security memory certified for qualified electronic signature and to store the private key in an independent way respect to the mobile telephone service, to the mobile telecommunication networks and to the Subscriber Identity Module. In particular, the secure memory is activated in order to perform a qualified electronic signature on the basis of an activation code inputted by the signer through the mobile phone device.

The certified memory is used to keep the digital identity of the user independent from Mobile Network Operators (MNO) and Mobile Network Services, and to reach the security levels required by national and international rules for protecting the private key of the end-user against extraction, in a context of qualified electronic signatures, basically being compliant to CC EAL 4+ (or higher) certification and the so called protection profiles required.

The security memory can also be a dongle, with analogous features of a described security memory of SD type, to plug into the audio/microphone socket of the smartphone.

The mobile telephone is configured to be connected, preferably via SMS (Short Message Service) to a communication network for the qualified electronic signature, or dedicated network, comprising a specific architecture of server components.

On the qualified electronic signature network, both users requesting requests to be signed using a qualified electronic signature, each of which can be implemented by one or more operation requests in succession, and users receiving operation requests to be signed using a qualified electronic signature, are enabled. Against one or more operation requests generated by the same original signature request by the requester, only one operation request will reach, after being modified, the recipient for confirmation by means of qualified electronic signature.

The recipient user, enabled to use this qualified electronic signature network through the mobile telephone, can use this mobile telephone, if necessary, in association with an optional supporting processor that can be provided with a larger display. In any case, the operation to identify the recipient takes place through the mobile telephone, in particular smartphone, which, by virtue of its typically handheld dimensions, is suitable to operate as identification instrument in mobility, for authorization processes that start on other devices or on the same smartphone.

The recipient user is reached through messages on the mobile telecommunication network, preferably via SMS text messages, by requests coming from this dedicated network on the basis of his mobile telephone number, associated with a SIM located in the smartphone.

The recipient can interact also directly via proximity networks by proximity device in his mobile phone device.

According to an important aspect of the invention, a recipient user can also proceed in an active manner to effect requests that require his qualified electronic signature, these requests being directed at himself; the recipient user can effect these requests through the mobile telephone enabled for the use of the qualified electronic signature network or through supporting processors, if provided. Confirmation of the requests by the user always takes place through said mobile telephone.

The requesting user can also be enabled as recipient for use of the dedicated network, or not be enabled for this use, in this latter case operating through the services provided by said network such as payment and subscription requests addressed to third party recipients. Access requests are only effected by the same recipients.

Requests that require qualified electronic signature can be effected, for example, through a software application on the mobile telephone, in particular the same application that manages the certified signature, or, for example, through the browser of a personal computer.

The software application on the mobile telephone is configured in general to manage confirmation by means of qualified electronic signature of operation request messages that reach the recipient, after being modified, received after sending a request effected by third parties or by the same recipient user.

Original requests of the requesting user are decomposed into one or more operation requests sent in succession, managed and forwarded to a front-end server of the dedicated network, i.e. the initial stage with respect to arrival of said requests, which:
- assigns to each single operation request a unique request identifier and a timestamp indicating at least date, hour, minutes, seconds, and
- interrogates its own user database registered within which the recipient users are registered for use of the dedicated network on the basis of their telephone number or of a respective identification, or registration, code in the qualified electronic signature system to verify their rights with respect to use of the dedicated network;
- on the basis of the user identified, extracts from the user database information of the user, such as an e-mail address and address references of one or more applicative servers to which the front-end server routes the operation requests on the basis of the type of these requests.

The front-end server is also configured to effect a verification of the correct format of the operation request and of the presence of the telephone number or identifier present in the same operation request. A software layer for connection to the dedicated network is installed on the front-end server and on the applicative servers.

The applicative server involved on the basis of the recipient user and on the type of operation request is installed with a body, for example a bank, at which the signatory recipient of the dedicated network is registered. The applicative server further validates the requests on the basis of the specific format and searches in its own user database for the presence of the user registered with the information received such as the identifier within the dedicated network or telephone number. In the case in which the check is successful and if the operation request requires to be signed by the recipient, the applicative server sends a text-based request message obtained from the corresponding operation request to the mobile telephone of the recipient user, sending in particular an SMS text message to the registered telephone number.

Upon receiving the text-based request message requesting signature, the application on the mobile telephone automatically visualizes on the display of the same mobile telephone a graphic interface so that the user can confirm or reject this request, through signing a qualified electronic signature of the recipient user; this signature is signed to data specifically received by means of the text-based message, typically SMS text message, corresponding to the aforementioned operation request message.

The recipient user enters a signature PIN code to confirm the signing of the qualified electronic signature activating the security memory. This signature PIN code is not transmitted on the dedicated network, but is used only to activate the signature locally.

The qualified electronic signature system allows digital subscription, via the mobile telephone provided with security memory, of the following text-based signature requests, each through management of the corresponding operation request message received requiring signature:
- payment
- document subscription
- access to websites and network services.

The recipient user can apply, through the mobile telephone, a qualified electronic signature with the private key.

The mobile telephone is also able to visualize notifications and send confirmation of receipt of the notification and is preferably also configured to allow requests for the aforesaid operation types to be effected actively.

The qualified electronic signature is applied to the information to be subscribed, in particular by applying an encryption through the private key on a hash string calculated on the text-based message of the request received onto the mobile device or on the hash contained in the message. In the case of payments and accesses, the information to be subscribed is differentiated each time from the previous ones, as it is associated with at least one unique variable part added by the front-end server of the dedicated network to which the requesters send the requests; the variable part includes, at least, a unique identifier and indication of the timestamp of implementation of the request. The fact that the signature requested must always be different prevents problems in the case in which it is copied by hackers; it cannot confirm another request. Instead, in the case of document subscription, advantage is taken of the fact that the documents are generally different each time, at least for a given recipient user, and therefore the information to be subscribed also varies. In the case of substitution of the qualified electronic signature with that of another subject, the signature verification system, with which the applicative server is provided, would detect that said signature was signed by a different party than the correct recipient.

Due to the use of the security memory, the private key is protected against copy and extraction.

The encryption algorithm used for the qualified electronic signature is the RSA algorithm, which is of asymmetric type; the qualified electronic signature is the electronic signature considered to have a high degree of security, such as to be legally equivalent to the handwritten signature in many national legal systems.

Identification of the enabled user on the dedicated network, in response to an operation request message requiring a signature, takes place by sending from the mobile telephone a qualified electronic signature in detached form, separate from the certificates and, in the majority of embodiments, separate from the plain text message to which it refers.

The recipient user of the dedicated network can access exclusively, with his own identity, the operations that can be effected through the qualified electronic signature application on the mobile telephone, as the qualified electronic signature that activates them can only be effected through the security memory associated with the mobile telephone, in which the protected private key of this user resides, unique in this network, as it relates to a unique public key within this network and registered there together with the qualified certificate containing said public key. Moreover, the PIN code for activation of the signature is known only to the user in possession of the private key and is not information replicated within the system. The PIN code for activation of the signature can only be interpreted by the security memory, but is not deducible by it. Therefore, the password or plurality of passwords sent on the network, usually used to access specific services/bodies, is/are substituted by the use of a single PIN code in the smartphone, not transmitted on the network.

According to a further aspect, the applicative server, after sending the SMS text message with the text-based request message to the mobile telephone, waits for a configurable time to receive the qualified electronic signature from the mobile telephone; if this time has not expired, upon arrival of the message containing said qualified electronic signature, the applicative server verifies the signature. On the basis of the type of request signed, the applicative server effects transactions integrating with other services of the body hosting the applicative server; for example, in the case of payments it is typically hosted at the user's bank. In this way, the user's sensitive information to perform the payment (for example, credit card number) is typically present only within the bank, to the advantage of security. More in general, adoption of the system by a body/service, through the typically internal use of the applicative server layer, allows the body and its clients to certify the identity of the user without the user's sensitive data being transferred on the network.

The applicative server according to a further aspect of the invention receives feedback on the transaction from the services of the body and sends it to the mobile telephone of the recipient user, and updates the status of the operation on the front-end server on the basis of the unique identifier of each operation request, any different operation requests originating from a same original request being linked, through the presence of the identifier of the previous operation request in the subsequent operation request; the status reaches the requester through the processor means used by him for the request. The network for the digital signature through this front-end server sends notification to the requester via e-mail, if the corresponding address is present in the request data. If the requester is registered in the dedicated network and provided his unique identifier within the dedicated network in the request, he/she receives a notification message on the status of the operation on his enabled mobile telephone.

According to a further aspect of the invention, for each original request, the user that received a text-based request message also receives a notification e-mail, in addition to an SMS text message.

According to a further aspect of the invention, on the side of the front-end server, the validated qualified electronic signatures are enveloped together with the plain text information, with the signature certificate and with the certificate of the Certification Authority that issued the signature certificate. If the document is a sales invoice, an electronic invoice is thus produced through the signature. The documents and the subscribed request messages are stored digitally on the storage servers of the dedicated network according to the legal digital storage process of the country of use, for example in Italy called "Conservazione Sostitutiva" (Electronic Storage). Preferably, a legally valid timestamp is associated with these signatures. These documents can be consulted, verified and visualized by the user through a specific service of the dedicated network.

According to the invention, a qualified electronic signature procedure is described. The procedure comprises the operations implemented by the qualified electronic signature system described above.

According to a further aspect of the invention, the procedure comprises also: using a temporary password (ATP), displaying a not hashed base string or a hashing of the base string and the temporary password on the second processing means of the signer, displaying the not hashed base string or the hashing of the base string and the temporary password on the first processing means of the requester. Furthermore, the method comprises computing by the applicative server the not hashed base string or the hashing of the base string on the basis of the information of the request and of the temporary password (ATP), and of further information comprising a session identifier on the interface server corresponding to the identifier of the request.

According to the invention, a mobile phone device for qualified electronic signature is described. The mobile phone device is adapted to exchange text-based communications on mobile telecommunication networks, or to exchange electronic data with proximity modules on proximity networks, on the basis of an identifier of the subscriber of a mobile telephone service comprised in a Subscriber Identity Module with which the subscriber is associated, comprising an operating system and means for operating with a security memory comprising at least a secure partition in which at least the private key of the subscriber is stored, the security memory having the technical features described above.

The mobile phone device is configured, through a dedicated software application executed in the operating system, to use the private key in the security memory and to sign a qualified electronic signature by encryption of a request message or data or parts thereof by means of the private key.

The mobile phone device is able to operate the electronic signature in the security partition of the security memory by keeping the private key in an independent way with respect to the mobile telephone service, to the mobile telecommunication networks and to the Subscriber Identifier Module on the basis of an activation code inputted by the signer through the mobile phone device.

Further characteristics and advantages of the invention will be apparent from the description below with reference to the accompanying drawings, provided purely by way of non-limiting example, wherein:
- Fig. 1 represents a conventional mobile phone device;
- Fig. 2 represents a mobile phone device according to the invention;
- Fig. 3a schematically represents a first architecture of the qualified electronic signature system according to the invention;
- Fig. 3b schematically represents a second architecture of the qualified electronic signature system according to the invention;
- Fig. 4 schematically represents a third architecture of the qualified electronic signature system according to the invention;
- Fig. 5 schematically represents a fourth architecture of the qualified electronic signature system according to the invention;
- Fig. 6 schematically represents a fifth architecture of the qualified electronic signature system according to the invention;
- Fig. 7 schematically represents a sixth architecture of the qualified electronic signature system according to the invention.

The qualified electronic signature system according to the invention is now described in detail.

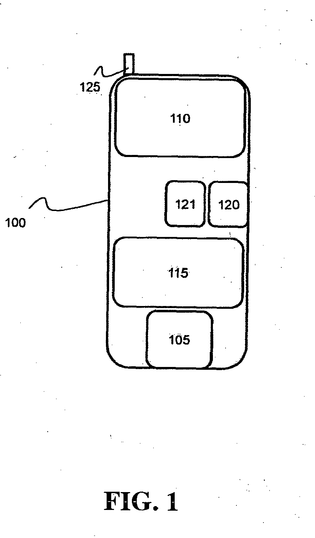

Fig. 1 describes a mobile phone device, in particular a smartphone, 100, i.e. a mobile telephone provided with the ability to operate as user terminal in a mobile telecommunication network and with an operating system for the execution of software applications, provided with a display 110, a keypad 115, a memory card 105 of microSD (micro Secure Digital) type housed in a corresponding reader of the smartphone 100, a wireless connection module to the telecommunication network 125 for sending/receiving SMS text messages, a SIM (Subscriber Identity Module) 120, and an optional module, used only in some examples of embodiment, for short-distance wireless connection 121 (for example NFC, Bluetooth, Wi-Fi) and/or Internet data traffic, inclusive of the ability to send and receive e-mails or push messages that can be used in place of SMS text messages. It can be included, among the proximity networks, or wireless data exchange systems, the QR-code system, in which the data are exchanged by reading a QR-code image through a digital camera on a smartphone. The layout of the elements of which the smartphone 100 is composed depends on the model.

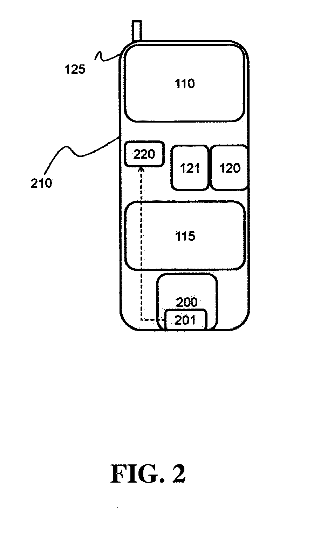

Fig. 2 represents a smartphone 210, analogous to the smartphone 100, configured to produce the signature in the qualified electronic signature system according to the invention. In this smartphone 210 for qualified electronic signature, a security memory 200 is provided in place of the memory card 105. Moreover, the smartphone 210 for qualified electronic signature is configured to interact, in reading and if necessary in writing, with this security memory 200 through a specific qualified electronic signature application 220, for example implemented as software program suitable to be executed in association with the operating system of the mobile telephone, which configures the smartphone 210 to produce the qualified electronic signature in accordance with the system and procedure according to the invention. This qualified electronic signature application 220 is preferably multi-functional, therefore with the ability to process all or part of the different types of text messages for payment requests, document subscription, web accesses or network services. This qualified electronic signature application 220 can be loaded, as in Fig. 2, in the smartphone 210 for qualified electronic signature, but can also be installed in the same security memory 200 or already be installed on this, ready for use by the user. The smartphone 210 for qualified electronic signature is therefore used for the qualified electronic signature and consequent identification of the user within the qualified electronic signature system according to the invention.

Smartphones 210 for qualified electronic signature correspond in general to conventional smartphones, such as the smartphone 100, however provided with a security memory 200, preferably removable, in a corresponding microSD (Micro Secure Digital) memory reader, which as well as allowing storage of common data in general, such as photographs or music, also comprises a partition certified according to the level of security required by national and international provisions for qualified electronic signature and for protection of a private key 201 stored in this partition. For example, for European Union countries, this level of certification required is fundamentally the Common Criteria EAL4+ (or higher), depending on the "protection profiles" required.

These certified memories differ from SIM cards, for example, due to the fact that they are independent from the telephone carrier and have different shape and dimensions. A smart card or a SIM card stores a limited quantity of data, has different shape and dimensions from the security memory, and cannot be housed in a microSD reader. In addition to being housable in this reader and having the dimensions of a microSD, besides having a noteworthy capacity, for example 2GB, a security memory is suitable to contain a secure partition for execution of the qualified electronic signature and for storage of the private key 201. The security memory can therefore fulfil both the normal functions of a common microSD card for storing large quantities of data (navigator maps, photographs or other data), and functions linked to the qualified electronic signature.

A similar security memory, called Mobile Security Card, was recently produced by the manufacturer Giesecke & Devrient.

It is important to note that the security memory 220 is used in combination with a telephone number (or a subscriber identifier) encoded in the SIM.

120. As the SIM 120 and the security memory 220 are removable, the user can use these elements together on other smartphones 210. The fact that SMS text messages are sent to a given SIM corresponding to the telephone number registered for that user in the qualified electronic signature system increases the level of security, in any case already guaranteed by the qualified electronic signature as the qualified electronic signature signed by the user adopting the security memory is in any case verifiable, allowing subsequent checking of whether the SMS text message was signed by the private key 201 associated, even if unknown, with the certificate corresponding to the recipient user and, in addition, with that telephone number. If the user changes telephone number he/she can update his registration in the dedicated network.

Another requirement for the qualified electronic signature resides in the use of a signature certificate containing the public key which is issued by a Certification Authority (CA), or Certifying Body, whether this is a government body or is recognized by this body. Digital certificates of this type are used for the qualified electronic signature within the qualified electronic signature system. To obtain a certificate of this type, it is normally necessary for a manager (registration operator) authorized by the Certification Authority (through a Registration Authority) to carry out a step of *de visu* recognition of the user to whom the certificate is to be issued, to also legally guarantee his identity.

Technically equivalent digital certificates can also be used, issued by bodies belonging to the same dedicated network but that do not issue qualified electronic signature certificates. In this latter case, the same process and technological requirements are in any case guaranteed, both in relation to the certifications on the security levels required on the process, and on the signature and protection devices of the private key 201. In this latter case, the signature effected is not actually a qualified electronic signature, but a signature defined here as equivalent qualified electronic signature. According to the difficulty or suitability of issue of the qualified signature certificate in the narrow sense, the user can decide whether or not to opt for an equivalent qualified electronic signature, which in any case from the viewpoint of security is in practice equivalent, and therefore satisfies the same technical requirements of security established by international provisions for the qualified electronic signature. If the user requires enforceable validity with full legal value he/she must opt for the qualified electronic signature in narrow sense. Hereinafter the term qualified electronic signature will also be extended to indicate the equivalent qualified electronic signature, if the user opts for this. Certificates issued by different Certification Authorities, also of different countries, are used within the qualified electronic signature system according to the invention. In the step of registration of the user in the dedicated network, a check is effected to ensure that the public key of the certificate is unique within the qualified electronic signature system according to the invention. If it is not, it is necessary for the user to have a new certificate issued, regenerating a new private key 201.

The signature on the security memory can be activated by means of a respective PIN code that enables the signature through the private key 201, while the public key and the corresponding qualified certificate can also reside in an unprotected area of the security memory. The PIN code is used exclusively on the terminal by the user to implement qualified electronic signatures or, if necessary, asymmetric encryptions, without this PIN code being transmitted on the dedicated network or other network. The operation to change the PIN code is available to the user at all times and involves only the same user, through the use of the qualified electronic signature application 220 or the base driver of the security memory.

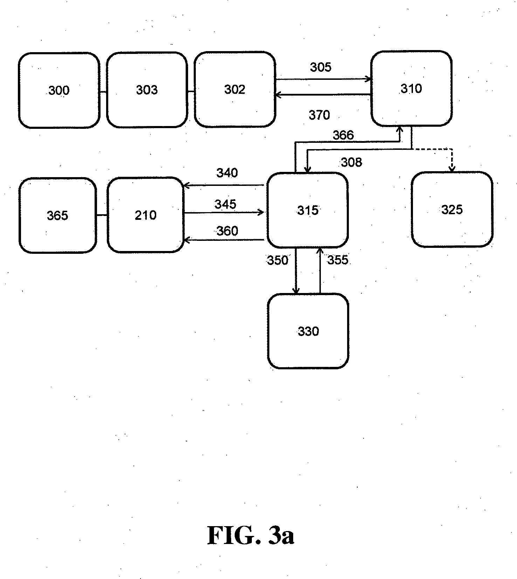

The user registered in the qualified electronic signature system proposed is provided with a smartphone 210 for qualified electronic signature with protected private key 201 present in the security memory 200, the private key 201 being combined with a qualified signature certificate related to the same user and to the related signature certificate of the Certification Authority that issued this certificate. The user is registered in the qualified electronic signature system, for example indicating during the registration step his telephone number or optional identification code within this qualified electronic signature system, an address/reference of an applicative server for each type of request that the user intends to manage (payment, subscription, access) and, if necessary, the e-mail address; this information is registered in the front-end server 310 or in a database connected thereto. Other information required for registration of the user in an applicative server 315 is the qualified signature certificate and the certificate of the Certification Authority that issued it; in each applicative server whose services are used by the user, these certificates are registered in relation to the user's telephone number, if necessary his email and any identification code within the dedicated network. The front-end server 310 and the applicative server 315 are described with reference to the diagrams in Figs. 3a, 3b, 4, 5, 6 and 7, which exemplify embodiments of the architecture according to the invention.

Different embodiments of the qualified electronic signature system according to the invention are represented through examples of flows in the schematic diagrams of Figs. 3a, 3b, 4, 5, 6, 7. In these schematic diagrams, common components of the qualified electronic signature system proposed are indicated with the same reference numeral, where these recur. Common components are represented, for example, by an interface server 302, the front-end server 310, the applicative server 315 of the recipient and a server body of the recipient 330. These servers can each reside on a different physical server or can be allocated on a different number of physical or virtual servers. For example, all the components could reside on only one server, while each of the aforesaid servers could actually correspond to a cluster of servers. The messages exchanged between the servers on the network that forms the qualified electronic signature system according to the invention are preferably encoded with base64 encoding or hexadecimal format, or with another method that prevents loss or alteration of information during transmission.

Communications between the different servers are not necessarily produced through a wireless communication network; the same can be said for communication between the interface server 302, where present in the examples of embodiment described, and the client of the requester if the device of the requester is not a smartphone 100 or 210. In the case of transmission in which another response message corresponds to a message, although without limiting the present embodiments to this type of transmission, following a message sent to a server, the agent (the client of the requester or one of the servers) that sent it waits for a response message within a configured timeout; the response can be of synchronous (e.g. TCP/IP), but also asynchronous type, adding an identifier to the response message to allow the calling agent to correlate it to the message previously sent by this latter. The embodiments described herein preferably refer, in a non-limiting manner, to the synchronous case for these messages. Moreover, if a message is of a certain type (QR-code, for example) the corresponding received message can be of a different type (internet traffic data, for example).

The messages exchanged by a smartphone 100 with the interface server 302 and by a smartphone 210 with the front-end server 310 are therefore, by way of non-limiting example, asynchronous wireless of SMS (Short Message System) type or, if using the optional wireless connection module 121, they can, for example, be transmissions with generic Internet data traffic. Analogously, again in a non-limiting manner, the messages exchanged by the smartphone 210 for qualified electronic signature with the applicative server 315, where present, are considered asynchronous (of SMS type). For example, with reference to Figs. 3a, 3b, 4, 5, text-based request messages 340 received by this smartphone 210, and confirmation messages 345 sent by it, for these latter the response of the server being of recipient status type 360, are preferably SMS text messages of asynchronous type. It is also possible to consider, for example, that the confirmation messages 345 are calls made through the optional wireless connection module 121 that are not short-distance, for example e-mail sent through the e-mail field of the recipient in the user database of the applicative server 315, or that are Internet data traffic calls to web services exposed by the applicative server 315 with response by this of recipient status type 360.

In general said messages 340, 345 and 360 are stored on the partition of the security memory that is different from the security partition, in order to show the history of these messages to the user in an intelligible way. This partition, if of big size type, can be also used by other applications like, for example, photographs and movies applications.

In the case in which the smartphone 210 is provided with optional wireless connection module 121, the SMS text message sent for the text-based request message 340 can be substituted, for example, by analogous text-based request message 340 transmitted via Wi-Fi or Internet data traffic; in this context the smartphone 210 can be made to listen, for example, on a specific port, through the application 220, for any aforesaid request messages. After receiving a message, the application 220 sends an additional receipt message to the applicative server if the model of the messages requires this.

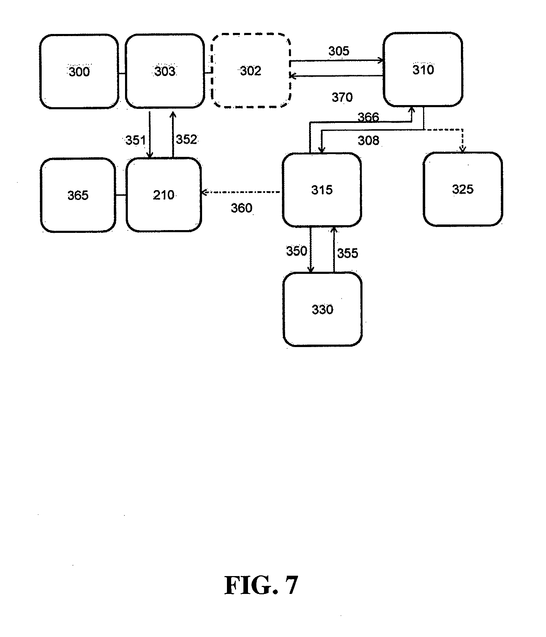

With regard to client request 351 and client confirmation 352 messages, respectively received and sent by the smartphone 210 within the flows shown in Fig. 7, the use of communication carried out with short-distance transmission through the optional wireless connection module 121, for example Bluetooth or NFC or QR-code or TCP/IP on Wi-Fi, is considered preferable although not obligatory.

Also these messages 351 and 352 are stored on the partition of the security memory different from the security partition, in order to show the history of these messages to the user in an intelligible way, as described above for the messages 340, 345 and 360.

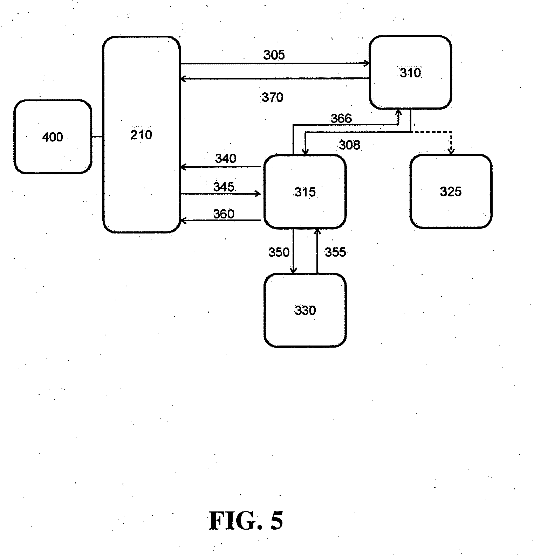

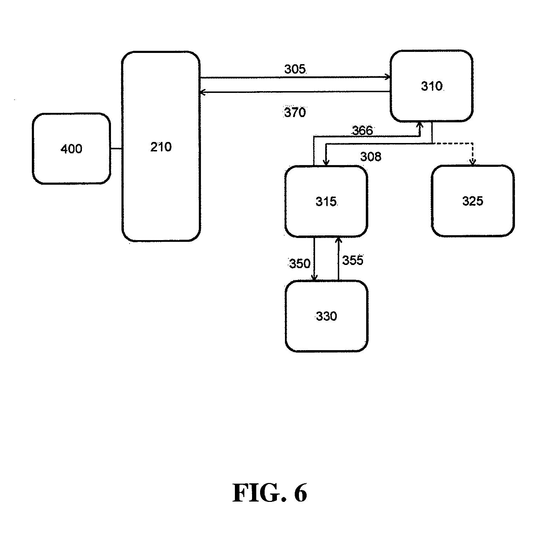

Operation request messages 305 sent by means of the qualified electronic signature application 220 to the front-end server 310 in the diagram of Figs. 5 and 6, and the requester status response message 370 can be asynchronous (for example SMS text messages) or, for example, synchronous in wireless mode if using the optional wireless connection module 121. The request operations are described in general below: these request operations can be original request operations of the requester which can correspond to several operation request messages sent to the front-end server, some of which do not reach the mobile telephone device for the electronic signature of the recipient, but in any case contribute to the execution of the operation as a whole.

In general, if the responses expected from the servers are not received, this triggers a timeout period, after which the request is considered not executed.

The first example of embodiment described relates to the payment request type, for example payment via bank transfer or debit card or credit card implemented through the network of the qualified electronic signature system, in the case of a user requesting the payment separate from the recipient user, therefore where at least the recipient is registered in the system; the recipient operates through the smartphone 210 for qualified electronic signature according to the invention and at least one applicative server is present therein to manage payment type messages for the recipient's bank, also interfaced with the qualified electronic signature system proposed, through this applicative server. An original payment request results in only one operation request 305.

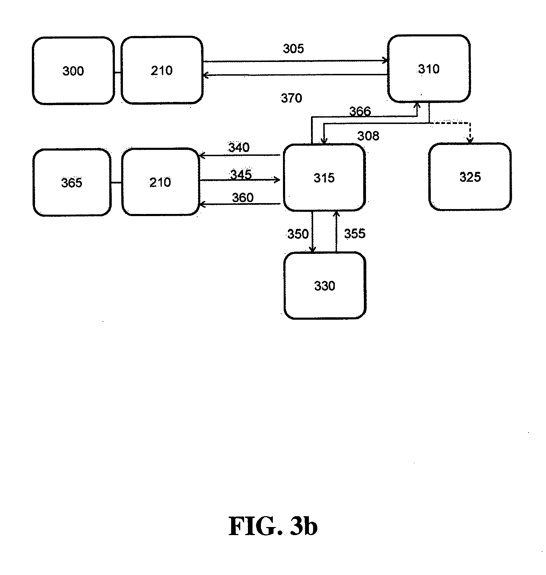

For the first example of embodiment, reference is made to the diagram of Figs. 3a and 3b.

In Fig. 3a a requester separate from the recipient is indicated with 300; the requester is the beneficiary of the transaction, or operates on behalf of the beneficiary, to effect payment requests. The requester 300 can, for example, be a merchant or a service company or public administration that requests a payment from a user of the recipient dedicated network 365, who is in fact a user of the qualified electronic signature system proposed.

In Fig. 3a the requester separate from the recipient 300 is connected by means of a processor 303, for example a personal computer. This processor 303 is indicated in the figure, but it could also be a conventional smartphone 100, for example, in the case of itinerant trade, to effect payment requests through an interface server 302, such as a website. This interface server 302 is configured to consequently effect an original request that translates into a single operation request 305, specifically a payment request, in automatic or interactive mode to the front-end server 310.

This interface server 302 can, for example, be a website from which to effect requests through a browser. Communication between the interface server 302 and the processor 303 or the conventional smartphone 100 can be implemented according to one of the methods known to those skilled in the art, provided that it allows the interface server 302 to translate the original requests of the requester 300 into operation requests 305 that can be processed by the front-end server 310, as better specified hereinafter, and the requester status messages 370 received by the same interface server 302 coming from the front-end server 310 to be interpreted in information intelligible for the requesting user 300.

Fig. 3b instead indicates a case in which also the requester separate from the recipient 300 is connected by means of a respective smartphone 210 for qualified electronic signature, which is configured to effect direct operation requests 305 to the front-end server 310 through the use by the requester 300 of an application software that coincides with the qualified electronic signature application 220, and interpret through this the requester status messages 370 received in information intelligible for the requesting user 300. Connection of the smartphone 210 for qualified electronic signature to the front-end server 310 can be carried out by sending SMS text messages on the mobile telecommunication network or sending data on the network in another wireless mode. In view of the aforesaid difference between diagram 3a and 3b, unless specified, reference will be made to diagram 3a for simplicity, without loss of generality.

The operation request 305 sent to the front-end server 310 comprises request data comprising
- indication of the type of payment request,
- identification data of the recipient of the dedicated network 365, which can comprise the mobile telephone number of the recipient of the dedicated network 365 or an identifier thereof within the qualified electronic signature system associated with this mobile phone number, or the identification of the recipient acknowledged via wireless networks, in particular by the wireless connection proximity module 121 (like QR-code or Bluetooth),
- financial transaction data; these financial transaction data comprise one or more data such as the total amount in cash of the sum requested for the payment, the related currency, the payment method selected (for example bank transfer or credit or debit card), the related reference for the payment, for example respectively the IBAN code of the requester or his credit or debit card number, the name of the beneficiary holder, the reason for payment, place, any e-mail address of the requester and/or of the beneficiary, any unique identifier in the dedicated network or telephone number of the requester or beneficiary if belonging to the dedicated network; other additional information can also be present in general on the basis of the payment method.

The front-end server 310 assigns a unique request identifier and a timestamp to the single operation request 305, verifies the correct format of the request and the presence in its own registered user database of the recipient user of the request 365, on the basis of the identification data, i.e. his telephone number or identifier in the qualified electronic signature system, present in the same operation request 305. If this identification data is not found in the registered user database of the server 310 or the data received in the operation request 305 message is incomplete or contains errors, the front-end server 310 sends the interface server 302 a requester status message 370 complete with the unique identifier of the request and with the timestamp previously assigned; the requester status message 370 in this case indicates an error. Instead, if the verification is successful, the front-end server 310 interrogates this registered user database, searching for, for the user of the recipient dedicated network 365, an address reference of the applicative server 315 (for example, its URL, Uniform Resource Locator, for an Internet connection) to which the front-end server 310 must route the operation request 305 on the basis of the type of request indicated therein, in this case a payment request.

Other applicative servers connected to the front-end server 310, for other types of request, represented in Fig. 3a for simplicity only by the Nth applicative server 325, are not involved by the process.

If the address reference is missing, the front-end server 310 sends the requester status message 370 complete with previously assigned unique identifier and timestamp, indicating the error that occurred.

Instead, if the address reference is present, the front-end server 310 sends a forwarded request message 308 to the receiving applicative server 315, i.e. a message complete with the information of the operation request 305, to which it adds the unique identifier and timestamp previously assigned by the front-end server 310 to the corresponding operation request 305. The applicative server 315 further validates the request 308 on the basis of the specific format and searching in its own registered user database for the presence of a user associated with the information received as identification data, i.e. the identifier in the qualified electronic signature system or the telephone number. The qualified electronic signature certificate associated with each user and the related certificate of the certification authority that issued it is also available to the applicative servers. The applicative server 315 checks the state of validity of the user (as described hereinafter) and of the certificate on the basis of latest available list of revocations and suspensions of said Certification Authority periodically downloaded from the applicative server 315 and therefore already available. This check is then repeated, after receiving the qualified electronic signature, on the basis of a list of revocations and suspensions updated subsequently to time that the signature was effected, as up to the time of signature these lists might have been updated at the Certification Authority with respect to those used in the first check. The preliminary check makes it possible to avoid messages being sent to invalid users on the basis of the available lists.

If one of these checks is negative, a status forward message 366 with negative response is sent by the applicative server 315 to the front-end server 310 in response to the previous forwarded request message 308; the front-end server 310 then sends a corresponding negative requester status message 370, in response to the previous operation request message 305. The requester status message 370 reaches the requester 300 through a client program on the processor 303 or 100 that processes the status received from the interface server 302. The requester status message 370 is complete with the identifier of the request and the timestamp assigned by the front-end server 310 to the operation request 305 and consequently present in the request message previously forwarded 308.

Instead, in the case of positive status of the aforesaid checks, the applicative server 315 sends a recipient side text-based request message 340 to the smartphone 210, sending an SMS text message to the telephone number stored in the user database of the server 315 for the same given recipient user 365. The applicative server 315 uses, as sender identifier, the telephone number of the recipient 365 to send it.

The text-based request message 340 sent to the recipient concatenates in an SMS text message the information of the forwarded request 308, including the identifier of the type of request related to the payment. Concatenation is intended as the arrangement in sequence of information in text format, if necessary divided by separators or according to a shared scheme, so that the recipient can, if required, recognize and interpret the different information in the same message. The text-based request message 340 is formulated to represent a clear payment authorization in natural language, e.g. "I authorize the payment of 321.00 euro to IBAN IT96R0123454321000000012345 in the name of Giochi and Giocattoli S.r.l, Milan, via Salici 32, time 16:43:54, request identifier 23456789"

The text-based request message 340 is stored on specific persistent areas, for example a mass memory, connected to the applicative server 315; the address reference to the file corresponding to the stored text-based request message 340, together with the identifier of the request that was assigned by the front-end server 310 to the operation request 305 and therefore present in the forwarded request 308 and in the text-based request message 340 is maintained within a database of said server 315; these data are maintained correlated with the identifier of the operation request 305 together with the timestamp of the same request and together with the recipient user 365, and with the other data of the text-based request message 340. The timestamp allows evaluation of whether the timeout, configured in the system to consider the requests expired, has expired.

The applicative server 315 sends the SMS text message of the text-based request message 340 to the telephone number obtained from the database connected to the same server. In general, the smartphone 210 for qualified electronic signature of the recipient 365, through the qualified electronic signature application 220 with which it is provided, parses the SMS text messages received. The qualified electronic signature application 220 distinguishes on the basis of the format and of the telephone number of the sender whether or not the generic SMS text message has been sent through the protocol of the network of the qualified electronic signature system.

In the case in which the smartphone 210 is switched off or the qualified electronic signature application 220 is deactivated, the text-based request message 340 is received and processed when the smartphone is switched on again or when the qualified electronic signature application 220 is restarted; if the timeout of the request has expired, the text-based request message 340 is considered rejected by the applicative server 315. If other text-based request messages 340 are received, processing thereof by the qualified electronic signature application 220 is suspended until the first text-based request message 340 has been executed. Subsequently, the following text-based request messages 340 are processed in order of arrival.

When the qualified electronic signature application 220 recognizes that the S M S text message received is a text-based request message 340, the qualified electronic signature application 220 is configured to automatically show on the display 110 of the smartphone 210 a graphic interface configured according to the type of request indicated in the message 340, i.e. payment request, document subscription, or network service access.

In the case of a payment request, the qualified electronic signature application 220 calculates the hash of the text-based request message 340 and shows in on the interface 110 together with the text-based request message 340. As the hash can contain hidden characters, it is encoded with hexadecimal notation or in base64 or other format on the display 110. The system is also configurable so that the text-based request message 340 already includes this hash, pre-calculated by the applicative server 315. In this case the multi-functional application 220 still calculates the hash of the message 340 and compares it with the one received, visualizing the status on the display 110. The length of the text-based request messages 340 is short and therefore calculation of the hash on the smartphone 210 does not cause performance problems.

The hash of the message 340, as this is visualized in plain text on the smartphone 210 and the hash calculation algorithm is of standard type, can also be recalculated by the user autonomously for an additional check, for example through calculation software available on the Internet.

The choice of the hash algorithm is dictated by the legislation of reference in the country of use in the case of strict compliance with the qualified electronic signature. For example, in Italy the algorithm SHA-256 is used. On the basis of the legislation of the country of use, before the signature, the hash must if necessary be padded with any additional information required by the legislation, such as the padding pkcs#1 version 2.1. The hash string can be visualized on the display 110; if the hash is also calculated by the applicative server 315, it must be present in the text-based request message 340 to allow the application 220 to implement the check.

The recipient user can decide not to confirm the request. In this case, it is possible to operate, in particular by selecting an option from the qualified electronic signature application 220, to be able to process any other text-based request messages 340; by selecting this option, the confirmation message 345 is not sent within the timeout configured, and therefore the qualified electronic signature network considers the operation request 305 rejected. It is also possible to configure the system so that this rejection is explicit, by sending from the smartphone 210 through the qualified electronic signature application 220 an unsigned negative confirmation message 345 containing the requested identifier of the previous operation request 305 assigned by the front-end server 310 and therefore present in the forwarded request message 308. The negative confirmation message 345 is interpreted by the applicative server that responds with a recipient status message 360 confirming receipt; the applicative server 315 sends the content of the confirmation message 345 to the front-end server 310 through a status forward message 366 in response to the previous forwarded request 308, again containing the identifier of the corresponding operation request 305. The front-end server 310 interprets the message and sends it to the requester as negative requester status message 370 in response to the related initial operation request 305.

Instead, if the user of the recipient dedicated network 365 wishes to confirm, i.e. sign the request digitally, he/she uses the keypad 115 to enter the PIN code requested by the qualified electronic signature application 220 and effects the qualified electronic signature on the aforesaid hash string. In particular, RSA encryption is applied through the private key 201 on the hash (decoded for example from base64 or hexadecimal format, useful in this context only for visualization or transmission) activated through entering a signature PIN code requested by the qualified electronic signature application 220.

If the signature PIN code is incorrect, the qualified electronic signature application 220 due to the error received from the security memory 200 visualizes the error on the display 110. According to a known scheme, if a permitted number of incorrect attempts, configured on the security memory 200 and if necessary also on the qualified electronic signature application 220, is exceeded, action must be taken to unblock the security memory 200 through the PUK (Personal Unblocking Code) using the qualified electronic signature application 220 or the base drivers of the same security memory 200, if necessary to reset the same PIN code. Once the security memory 200 has been unblocked, the operation can be continued by entering the correct PIN code. If, in the meantime, the configured timeout is triggered, the operation request 305 is considered rejected. Alternatively, also in a situation with the PIN code blocked, it is possible to explicate and manage the explicit rejection as described above, as it does not require a signature.

If the PIN code is entered correctly, the qualified electronic signature is implemented on the hash on the security memory 200 of the smartphone 210 starting from the text-based request message 340, through the qualified electronic signature application 220 that operates on the security memory 200. This signature PIN code is not transmitted either on or outside the dedicated network, but used only to activate the signature locally on the smartphone 210.

To allow verification and identification, a detached qualified electronic signature is sent from the smartphone 210 to the applicative server 315 through a confirmation message 345, which contains the unique identifier of the associated operation request 305. This detached qualified electronic signature, also called separate electronic signature, has no plain text message to which the hash refers, no associated signature certificate, and no certificate of the Certification Authority that issued the signature certificate. Otherwise, it is called attached qualified electronic signature. The confirmation message 345 reaches the applicative server 315. It effects a first format check of the confirmation message 345 and, if this is positive, it verifies the signature contained in the confirmation message 345 on the basis of the text-based request message 340, without the control hash if present therein as text, which is thus to be considered the plain text document with respect to the signature, previously stored on the basis of the unique identifier associated by the front-end server 310 with the operation request 305; the signature verification is also conducted on the basis of the signature certificate associated with the telephone number in the database, and with the certificate of the Certification Authority that issued the signature certificate.

In general, the applicative server 315 effects a periodic download from the servers containing the revocation and suspension lists or CRL-CSL (Certificate Revocation List - Certificate Suspension List) of the Certification Authorities that issue the signature certificates present in its respective database, registering for each download of these lists the timestamp corresponding to implementation of the download request. If a certificate of the qualified electronic signature system has been revoked or suspended, or has expired, the status of the corresponding user is considered disabled by the applicative server 315 for any requests addressed to him with timestamp subsequent to or the same as the time at which the validity of the certificate expired; this time is indicated in the corresponding CRL-CSL. This is also the case if a user of the dedicated network cancels the agreement for the qualified electronic signature system. The information concerning disabling of the user, validity of the certificate, the timestamp starting from which the certificate is invalid, the download timestamp of the CRL-CSL list with which validity verification was conducted, is available in the database of the applicative server 315.

Specifically, the applicative server 315 compares the download timestamp of the CRL-CSL list of the Certification Authority related to the user identified by that telephone number, with the timestamp with which the signature is received. If the download request timestamp is subsequent in time to the signature receipt timestamp, the applicative server 315 considers the last CRL-CSL list to validate the certificate, otherwise the applicative server 315 downloads said updated CRL-CSL list in advance with respect to the time established for the download and records a new timestamp corresponding to the time at which the download request was effected, which is valid to consider the status of the certificate, as it is subsequent to receipt of the signature. If the certificate linked in the database to the telephone number has been revoked or suspended or has expired at the time coinciding with the timestamp corresponding to receipt of the signature, or if the operation to verify the signature contained in the confirmation message 345 fails, then the message 345 is not validated. This can be due, for example, to the signature being effected after revocation of the certificate, or if the signature is effected by a different user with respect to the designated one, using a different private key 201 from the one combined with the public key related to the certificate with which the user is registered in the applicative server 315. If the SMS text based request message 340 reached the correct SIM 120 linked to the telephone number on the basis of the information registered in the database, and above all if the signature was implemented with the correct private key 201 related to the correct certificate registered in the database, the signature effected can be validated.

The applicative server 315 also compares the current time with the timestamp of the operation request 305 assigned by the front-end server 310 and present among the metadata related to the text-based request message 340 available to the applicative server 315; if the difference is greater than the timeout configured in the system for the particular type of request, the verification fails.

If verification of the confirmation message 345 at the level of the applicative server 315 fails, a recipient error status message 360 is sent to the smartphone 210 in response to the previous confirmation message 345, and subsequently an error status forward message 366 is sent to the front-end server in response to the previous status forward message 308; the front-end server 310 sends a requester error status message 370 in response to the initial operation request 305; the requester status message 370 is complete with the timestamp and with the unique identifier assigned to the operation request 305 (and therefore to the messages originated for managing this request) by the front-end server 310. The requester status message 370 is interpreted and made available to the requester separate from the recipient 300 through interpretation of the interface server 302 and subsequent visualization or updating on the processor 303 or on the smartphone 100.

The applicative server 315 in the case of payment requests is typically installed at the bank of the recipient user 365; if the signature verification and other verification operations are successful, the applicative server 315 sends a payment order request 350 to the server of the bank 330 connected to the network of the qualified electronic signature system proposed; the order request 350 contains the data present in the text-based request message 340 and other data that may be requested by the bank and available on the applicative server 315 or its database.

The server of the bank 330 comprises, through its database within the network of the bank, an association between its clients and the users of the qualified electronic signature system, based on the identifiers and telephone numbers with which they are registered in the qualified electronic signature system. On the basis of this association, the server of the bank 330 can assign the correct current account or, for example, the correct credit/debit card corresponding to the user 365 from which to effect the payment.

If there is insufficient available cash in the corresponding account, or in the case of incongruent or incorrectly formatted data, a negative order feedback message 355 is issued in response to the order request 350, transmitted to the applicative server 315, which sends a respective recipient error status message 360 to the smartphone 210 in response to the previous confirmation message 345. The applicative server 315 also sends a specific error status forward message 366 to the front-end server 310, in response to the previous status forward message 308. The front-end server 310 then sends a requester error status forward message 370 to the requester, in response to the previous initial operation request message 305. The requester status message 370 is managed in the same way as the other cases mentioned above.

In the event of validation by the server of the body of the recipient 330, it sends a positive order feedback message 355 to the applicative server 315, in response to the previous order request message 350. The applicative server 315 in turn sends a positive recipient status message 360 to the smartphone 210 in response to the confirmation message 345 previously received, and a positive status forward message 366 to the front-end server 310, in response to the previous forwarded request message 308. The front-end server 310 sends a positive requester status message 370 to the requester 300, in response to the initial operation request 305. The requester status message 370 is managed in the same way as in the previous cases, sending the positive status message to the requester separate from the recipient 300.

If the operation request message 305 is complete with e-mail address of the requester 300 and/or of the beneficiary, the front-end server 310 sends to the corresponding e-mail address/addresses the e-mail that translates the requester status message 370 into natural language, both in the case of positive status and in the case of negative status of the transaction.

In the case of positive status, if the identifier in the dedicated network or the telephone number of the requester or beneficiary belonging to the dedicated network was present in the operation request 305, the front-end server 310 manages a notification to this user, which is received on the smartphone 210 of the requester/beneficiary.

For each SMS text-based request message 340, the applicative server 315 also sends the user 365 an e-mail with the same content, if this information was provided in the registration step of the user in the dedicated network.

The front-end server 310 updates the status of the operation started with the initial operation request 305, on the basis of the status forward message 366 received, to be able to check, also subsequently, the status of the transaction, identified with the unique identifier assigned by the same front-end server 310, that connotes it as indicated above also with a timestamp. Through the payment method configured by means of the signature system of the payment request described neither the credit card number of the user belonging to the dedicated network 365, nor other sensitive information thereof, such as the password, is sent on the network. The sensitive information of the user of the dedicated network 365 is managed within the bank, to the advantage of security.

If the bank of the beneficiary set by the requester 300 separate from the recipient is the same as the recipient 365, it is possible to avoid, in the operation request 305, assigning as parameter the beneficiary account reference (for example, credit card number of the beneficiary) linked to the payment method set by the requester, increasing confidentiality for the beneficiary, and instead assigning the identifier or telephone number within the dedicated signature system according to the invention also in relation to the beneficiary in the operation request 305. In fact, in this case the bank has the data of both recipient and beneficiary.

If the body using the applicative server 315 is an intermediation body that has sensitive data both of the beneficiary set by the requester 300, and of the recipient 365 with the respective information related, for example, to the respective credit cards or other payment methods, and makes these data available as database accessible to the server 315, it is possible to avoid entering sensitive data (for example the credit card number) in the operation request 305 also in relation to the beneficiary. Sites and e-commerce merchants can interact with the network through a dedicated payment gateway by the applicative server 315. In these cases it is possible to maintain the credit card data during the registration phase in the gateway, so that a require generated from said gateway generates a request to one of said operators. Another possibility is that the applicative servers 315 are in the banks, and the banks of the recipients 365 provided with applicative servers 315, through a secure and dedicated network request the sensitive data for payment from the banks of the beneficiaries through the applicative servers 315 of these latter and greater confidentiality is obtained for the beneficiaries, as also in this case the operation requests 305 contain no sensitive data of these beneficiaries.

The applicative server 315 can send to an electronic storage server the text-based payment request messages 340, with the signature, the signature certificate and the certificate of the Certification Authority that issued the signature certificate. Typically, at least one legally valid timestamp is associated with these signatures. These elements can be consulted by the signatory user 365 and by the requester, if belonging to the signature system proposed. The signature verification function is also available.

Therefore, ultimately in the systems of Figs. 3a and 3b described above, the operation request 305 is validated and processed by the front-end server 310 of the qualified electronic signature system, becoming a forwarded request 308 to the applicative server 315, which in turn forwards this request as text-based communication 340 to the user terminal, i.e. the smartphone 210, where the qualified electronic signature is signed on the basis of this text-based communication sent on the mobile telecommunication network or parts thereof.

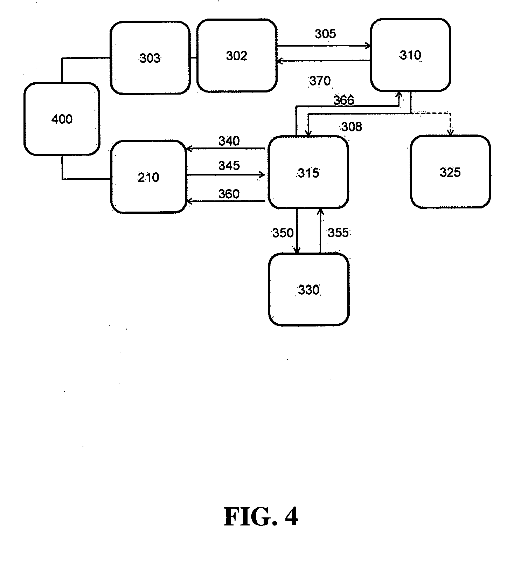

Fig. 4 shows a diagram of a variant relating to a further payment procedure in which 400 indicates a recipient user of the payment request 305 that also corresponds to the requester performing said operation request 305.

The diagram of Fig. 4 compared to what is shown in Fig. 3a presents the difference indicated above.

In fact, the user 400 uses the smartphone 210 to manage confirmation through qualified electronic signature, namely processing of the text-based request message 340, of the confirmation message 345 and of the recipient status message 360. However, in this case it is the same recipient 400 that also effects the operation request 305, preferably through another processor, i.e. the supporting processor 303, as shown in Fig. 4, but this processor in a variant can also be the conventional smartphone 100, which is separate from the smartphone 210 used in the qualified electronic signature system proposed. Naturally, the same smartphone 210 that manages confirmation can also be used as conventional smartphone 100 also to effect the request using functions that do not use the security memory 200 and the qualified electronic signature application 220, only to effect the request. For example, the user 400 could use the browser of said smartphone 210 to effect operation requests 305.

The user 400 of the qualified electronic signature system can, for example, correspond to a user operating on an e-commerce website associated with this qualified electronic signature system; the website corresponds to the interface server 302, and the user, for example, can intend to actively effect a purchase or send money through the network of the qualified electronic signature system through the interface server 302 in favour of a beneficiary. The user 400 introduces, for example, in place of his credit card data, his telephone number or identifier within the dedicated network.

In the same manner as described with reference to the architecture of Fig. 3a, the information entered, for example, through a processor 303, for example a laptop processor connected to the e-commerce website or other interface server 302, for example for the payment of parking fees or fines, in any case implies confirmation via smartphone of the dedicated network 210 and through the smartphone 210 the user can authorize the payment via qualified electronic signature just as in the case of the embodiment described with reference to Fig. 3a. Fig. 5 represents a further embodiment, where, with respect to Fig. 4, the user interface of the user 400 that is at the same time requester and recipient is represented only by the smartphone 210 both to effect the request and to manage confirmation. In this case, unlike the embodiment related to Fig. 4, the qualified electronic signature application 220 sends the operation request 305 directly to the front-end server 310, without interfacing with the interface server 302. Optionally, part of the data necessary to compose the request 305 (for example, the reference of the recipient and the price) may be previously read via wireless connection module 121 in the proximity network, for example via QR-code on the goods to be purchased, on an advertising or on an e-commerce site.

In this architecture, the recipient status message 360 only returns notification of receipt of confirmation 345 to the qualified electronic signature application 220, as the smartphone 210 for qualified electronic signature in any case receives the final status of the requester status request 370.

Fig. 6 represents a further architecture implementing the system according to the invention, where the user 400, requester of the payment and recipient of the payment request, uses only the smartphone 210 for qualified electronic signature to connect directly to the front-end server 310, even reading the necessary data through the wireless connection module 121; in this embodiment, moreover, the operation request 305 associated with a given transaction is already complete with qualified electronic signature, which is implemented before the same request step. Through the application 220, the smartphone 210 proposes a unique identifier of the transaction (i.e. of the operation request 305 and subsequent messages) and a timestamp, which are then subjected to validation by the front-end server 310 instead of being generated by this, as it occurs in the previous embodiments. Preferably, this unique identifier of the transaction is a hash string calculated on the concatenation of the information to be signed, of pseudo-random information provided by the qualified electronic signature application 220; if the front-end server 310 rejects the operation request 305 with a requester status message 370 indicating as reason, for example, incorrect identifier, as it is already present in the system or indicating as reason, for example, incorrect timestamp of the request, as it differs from the one detected - at the time of receipt of the operation request 305 - by the front-end server beyond a configured tolerance, the qualified electronic signature application 220 automatically re-calculates the operation request 305, the identifier and the timestamp, which change and are used in a further operation request 305 . As the message to be subscribed is different, given the modification of the aforesaid information, the signature must also be re-implemented, requesting the signature PIN code from the user.

In the case of operation request 305 validated by the front-end server 310, the applicative server 315 receives the qualified electronic signature within the forwarded request 308, as the signature is received by the front-end server 310 within the operation request 305 and the front-end server 310 forwards it to the applicative server 315.

As opposed, for example, to the first example of embodiment described with reference to Fig. 3a, in this case the applicative server 315 does not exchange messages with the smartphone 210, as the signature is already known to the same applicative server. The applicative server 315 nonetheless verifies the signature as described with reference to Fig. 3a.

Then, just as in the previous cases, at the end of the operations the order feedback 355 is forwarded by the server that effects the payment to the applicative server 315, which sends the status forward message 366 to the front-end server 310, which sends the requester status message 370 received on the smartphone 210 and the status of the operation is thus shown. In this embodiment the signature is sent with also the information in plain text in the operation request message 305.

A further embodiment relates to the document subscription request type, which is not necessarily payment authorizations but can be documents of any type, through qualified electronic signature, where the requester of the signature differs from the subscriber or recipient, as in the diagrams of Figs. 3a and 3b. Also in this case, the difference of the process related to Fig. 3b with respect to 3a consists in the fact that in the case 3b communication between smartphone 210 and front-end server 310 takes place without the intermediation of the interface server 302. Given this difference, hereinafter reference will be made for simplicity to the diagram 3a, without loss of generality. The requester separate from the recipient 300 can, through these architectures, effect document subscription requests to the recipient 365. An original request of this type is normally composed of two operation requests 305 in succession: the first for the upload of the document, the second for the actual subscription, even if, for example, the embodiment based on Fig. 6, discussed hereunder, has only one operation request 305 that contemplates both upload and subscription information. Returning to the diagram of Fig. 3a, the user of the recipient dedicated network 365 is registered in the qualified electronic signature system according to the invention, with an applicative server 315 that manages original request messages of document subscription type.

In the case of document subscription, for example in the case of an insurance company requesting subscription of a contract by the user of the recipient qualified electronic signature system 365, the first operation request 305 for document upload is sent to the server 310, which does not reach the recipient user 365; this upload request is complete with metadata for the subsequent document search. The front-end server 310 sends a forwarded request 308 to the applicative server 315 which stores the information received assigning to the document a respective unique identifier of the document through which it is stored on persistent memory together with the information of the identifier of the upload operation request 305; in response the applicative server 315 provides in the status forward message 366 the document identifier, which is sent by the front-end server 310 through the requester status 370, in response to the upload operation request 305, to the processor 303 with which the requester operated, as indicated with reference to the diagram of Fig. 3a; alternatively to the processor 303 he/she can operate through the smartphone 100.

Subsequently, again through a processor 303 or smartphone 100 an operation request 305 is sent by the same requester 300, or by another requester, for subscription of the document previously stored, which, just as for the payment requests described previously, requires indication of the type of operation request, specifically of document subscription type, the mobile telephone number of the recipient registered in the dedicated network 365 or the identifier of the qualified electronic signature system associated with this number, the unique identifier of the document and/or of the previous upload operation request 305, and the e-mail address of the requester or an identifier of the requester in the qualified electronic signature system.

Within the database of the applicative server 315 an address reference to the corresponding document identifier is maintained, together with the identifier of the related subscription operation request, of the related timestamp and of the recipient user.

A text-based request message 340 is then sent to the smartphone 210; the message contains the identifier of the subscription operation request 305, the hash string of the document and the address reference (e.g. URL) of the document in the meantime published by the applicative server 315 in an area accessible by the user 365. The text-based request message 340 includes the identifier of the type of request relating to subscription and if necessary the identifier of the document, the timestamp assigned by the front-end server 310 to the subscription operation request 305, as indicated in relation to operation of this server with reference to Fig. 3a.

The text-based request message 340 is interpreted by the qualified electronic signature application 220 and visualized on the display 110 to represent a clear document subscription request in natural language. Within the display it is possible to clearly read the address reference, for example the URL, where the document is published to be visualized and the hash string of the document, calculated by the applicative server 315 and sent to the smartphone 210, as the document could be of considerable dimensions and calculation of hash string on the smartphone 210 could be problematic. As the hash string can contain hidden characters it is encoded with hexadecimal notation or in base64, or other format on the display 110. Also in this case it is possible to select the option of the application 220 that allows recalculation of the hash on the smartphone 210 and verification of the one received, or this hash could be recalculated using other software on a supporting processor, by first downloading the document at the address reference indicated in the message.

If the user 365 provided an e-mail address during the registration step, he/she can also be reached simultaneously by an e-mail message containing the same message visualized on the smartphone 210 and sent by the applicative server 315; in this way, for example, the recipient 365 can receive the e-mail consulting the mailbox on a supporting processor and by clicking on the address reference of the document, present in the e-mail, visualize it on a larger display. The file name present in this reference can be represented by the same hash to allow a further check available to the user.

With this operation the user of the recipient dedicated network 365 can download the document file and recalculate the hash using other tools, for example present on the Internet.

In any case, the document can be visualized on the display 110 of the smartphone 210 through the choice of a corresponding option on the qualified electronic signature application 220.

The hash string is calculated by the applicative server 315, as already described with respect to the embodiment of Fig. 3a, where the confirmation message 345 is in fact constituted by the identifier of subscription operation request 305, by the detached qualified electronic signature effected on the hash of the document, and if necessary by the unique identifier of the document. The signature corresponds to the RSA encryption through the private key of the hash, once it is decoded from the presentation format such as base64 or hexadecimal. Also in this case, on the basis of the legislation adopted in the country of use, it may or may not be obligatory to add other information to the hash before the signature.

The applicative server 315 verifies the signature contained in the confirmation message 345 retrieving the document file, the signature certificate associated with the telephone number in the database related to the user to whom the document subscription operation request 305 was sent, being unnecessary to effect an order request 350 to the server 330.

Here too, just as in the embodiments described with reference to Fig. 3a, if the subscription operation request message 305 is complete with the e-mail address of the requester, the front-end server 310 sends to the corresponding e-mail address/addresses the e-mail that translates the requester status message 370 into natural language, both in the case of positive status and in the case of negative status of the transaction. The e-mail sent contains as attachment the signature of the document, if necessary in attached mode, i.e. having enveloped with the signature, i.e. attached thereto, also the document, the signature certificate and the certificate of the correlated Certification Authority; the e-mail also contains details of the subscription operation request 305 and the identifier of the document. Analogous e-mail can be sent to the e-mail address of the user 365.

If the subscription operation request 305 contained the identifier of the requester in the dedicated network or the telephone number of the requester, the front-end server 310 sends him a notification to the related smartphone 210 of the requester through his telephone number registered in the dedicated network.

In general, the further aspects of the flows described with reference to Fig. 3a then apply, where the document is considered in place of the text-based request message 340.

Through this signature method, the user 365 can subscribe documents in mobility through his smartphone 210 for qualified electronic signature, following a request from third parties, store these subscribed documents in time and send them to the requester.

If the document is an invoice or a receipt, this process allows digital subscription thereof and therefore the production of an electronic invoice or receipt. This management can be combined with the electronic payment thereof by the client registered in the qualified electronic signature system: if the metadata of the invoice or receipt uploaded contains the client's unique identifier or his telephone number within the dedicated network and the information for a payment request, after management of the message 305 for subscription of the invoice by the seller, this can be generated automatically by the interface server 302 in the embodiment of Fig. 3a, or in the embodiment of Fig. 3b a payment operation request 305 can be generated by the application 220 on the smartphone 210, addressed to the client, who can effect the payment via smartphone 210. A further embodiment of document subscription system can operate with the architecture of Fig. 4, as described previously, where the user 400 who is requester and recipient operates, for example, on a document or accounting system associated with the dedicated qualified electronic signature network; the document or accounting system or other service is represented by a website or interface server with the dedicated certification network, through which the user 400 can sign electronic invoices or documents also of considerable dimensions through the smartphone 210 and can use the e-mail field of the requester with an e-mail address to which the user 400 intends to send the signed document.

A further embodiment of document subscription system can operate with the architecture of Fig. 5, as described previously, where the user interface is represented solely by the smartphone 210 which is interfaced directly with the front-end server 310 without intermediation of the applicative server 302, both to effect the request and to manage document subscription. In this flow the recipient status message 360 only returns the notification of receipt of the confirmation 345 to the qualified electronic signature application 220, as the smartphone 210 in any case receives the final status of the requester status request 370.

A further embodiment of document subscription system can operate with the architecture of Fig. 6, as described previously, but where the hash is always calculated by the qualified electronic signature application 220, and therefore allows operation in the case of documents of limited dimensions, such as SMS text messages entered on the smartphone 210, which are then signed. In this case the document is sent via subscription operation request message 305, simultaneously to any metadata for a subsequent search on the storage systems of the dedicated network, and simultaneously to the qualified electronic signature of the document; the document can be entered with the keypad 115 of the smartphone 210 or can be retrieved as a file.

The user 400 can use the e-mail field of the requester with an e-mail address to which he/she intends to send the signed document. Alternatively, he/she can use the additional field in the request that corresponds to the unique identifier or telephone number of a user of the dedicated network to whom the signed document is to be sent. In this case, upon receiving the positive requester status 370, the qualified electronic signature application 220 present on the smartphone of the dedicated network 210 notifies the user 400 that the operation has taken place; moreover, the dedicated network sends notification to the smartphone 210 of the user of the dedicated network designated by the signatory; the recipient of the notification can read, through the application 220, the document from his smartphone 210, having the certification of the identity of the server provided by the dedicated network.

A further embodiment relates to secure and certified access to network services integrated with the dedicated network, such as websites, including home banking and public administration websites. This further embodiment of secure and certified access can operate with the architecture of Fig. 4, wherein the user of the dedicated network 400 is registered with the dedicated network with an applicative server 315 that enables accesses to the interface server 302 and is connected to the dedicated network to effect an access request to an interface server 302 through the supporting processor 303 with display or if necessary the conventional smartphone 100, including in this case the same smartphone 210 subsequently used in the confirmation step, which however does not use the qualified electronic signature application 220 and the security memory 200 for the request step. The access request is normally composed of two operation requests 305 in succession. The interface server 302 is represented by the service or website on which the user 400 wishes to authenticate himself. The access requester and the user confirming it are in this case the same user 400, who operates, as requester, in the same manner as the requester 300 described with reference to the architecture of Fig. 3a. The interface server 302 can therefore, for example, implement a website to which the user 400 effects requests through a browser of the processor 303 or of the smartphone 100 according to known protocols, which allow the interface server 302 to translate the requests of the user 400 into operation requests 305 and to interpret the requester status messages 370 received by the same interface server 302 in information intelligible for the user 400 in the role of requester.

According to a further aspect of the invention, the generic service/website 302 belonging to the communication system with certified signature requests information to be entered in specific fields according to the user/password scheme, where in this case however the password is an Any Temporary Password, or ATP.

The user code is referred to the user 400 and can be his telephone number or his unique identifier within the system according to the invention or his unique identifier within the specific service/website 302. In this last case, association with one of the two aforementioned identifiers is present within the service/website 302.

The ATP represents a random alphanumeric code decided by the user at the time at which he/she enters it, i.e. at the time at which he/she is asked to enter a password for a given transaction, such as login or authorization of an order. The first operation request 305 comprises indication of the access request type, the mobile telephone number of the recipient of the dedicated network 400 or identifier of the dedicated network associate with this number, the identifier of the user session on the service/website 302, the ATP and if necessary the reference (for example URL) of the service to be accessed. The operation request 305 is sent to the front-end server 310.

The user 400 in the role of recipient substantially operates in the same way as described for the recipient 365 with reference to Fig. 3a; however, before sending the text-based request message 340 to the user 400 as recipient on the smartphone 210, the applicative server 315 carries out further specific checks; in fact, the applicative server 315 stores the history of the last n ATPs used by the user, where n is a configurable integer. In the case of a request with the same ATP as one present in the history, the request fails. Vice versa, the applicative server 315 prepares a string defined herein as base string; the base string is a string of characters that forms part of the text-based request message 340.

The base string can represent plain text information or be the hash of this plain text information, on the basis of the system's configuration. The aforementioned plain text information is a string of characters obtained from the concatenation of information present in the forwarded request 308, including the ATP, the unique identifier of the operation request 305, if necessary together with the timestamp from the front-end server 310, if necessary the session identifier, and if necessary the reference of the service, in addition to other optional data. Therefore, the base string coincides with this whole string or with its hash, according to the configuration. The information on the session is known by the interface server 302 and is present in the server 315 linked to the identifier of the corresponding operation request 305. Moreover, this link is subsequently also known to the interface server 302, through the requester status message 370 corresponding to the first operation request 305. The requester status message 370 indicates among the data the base string in the case of positive status, and in any case the session identifier and first operation request 305 identifier, so that the interface server 302 can place them in relation, as well as receiving the information on the status of the operation request and of the base string for the session indicated. At the level of the message 340, the information on the session could be omitted, as the confirmation implemented by the smartphone 210 comprising as information the identifier of the first operation request 305, would be associated by the applicative server 315 with a confirmation for the session linked to this operation request 305.

If the base string is in plain text it contains in plain text at least the ATP and the identifier of the first operation request 305, and the text-based request message 340 is composed of base string and identifier of the request type (access type request); otherwise, if the base string is the aforementioned hash, it is formed by the concatenation of request type, base string, ATP and identifier of the first operation request 305, if necessary the session identifier and other optional information that may be present in the plain text information on which the aforesaid hash is calculated.

After the applicative server 315 has received the ATP in the forwarded request 308, if it is not valid on the basis of the aforementioned checks, it sends to the front-end server 310 through status forward message 366 indication that the ATP entered is invalid or, if it is valid, it sends a positive status forward message 366. This forward message 366 contains the identifier of the operation request 305, the base string and the session. The front-end server 310 then forwards a corresponding requester status message 370 with the same information, if necessary including all the information present in the forwarded request message 308, to the interface server 302 which for the session coinciding with that received updates the indication of invalid ATP, session and identifier of the first operation request 305 or, if positive, the value of the base string and of the identifier of operation request 305 received, associated with the session together with any optional information received. The graphic interface present on the processor 303 or smartphone 100 is updated automatically or on request of the user 400 and the error message or, in the positive case, the base string, is visualized thereon.

If the base string is in plain text the ATP contained therein may be hidden. If the base string is a hash, if necessary the information is presented so that the user can calculate this hash autonomously with the other tools, on the concatenation of the information visualized on the request device, to be able to compare this hash with the one visualized, knowing the rules with which the information present on the graphic interface is concatenated to calculate the hash. These rules can also be explicated on the graphic interface of the interface website 302 as information note. Also in this case, if the hash is present, it is preferably encoded with hexadecimal notation or in base64.

However, by sending the requester status message 370 correlated to the previous operation request message 305 the operations have not been terminated; the server 315 stores the data of the first operation request 305, of the message 308 and 340. Moreover, a further operation request message 305 is created automatically by the interface server 302, upon automatic request by the processor 303 or by the smartphone 100 of the requester, to terminate the activities. This operation request message 305 indicates among the request type data, the identifier of the previous operation request message 305 obtained from the previous requester status message 370, and the retrieved session identifier runtime which must coincide with the previous one for the new request to be valid.

The new operation request message 305 is assigned a timestamp and a new identifier through the front-end server 310. The front-end server 310 sends the content of the new operation request message 305, complete with request identifier and timestamp, through the forwarded request message 308 to the applicative server 315 where the first request message 305 was registered, marked by its identifier, together with its data with an overall operation status of "wait" type. The new forwarded request message 308 and its identifier are, at the level of the applicative server 315, at this point correlated analogous parameters of the previous request, due to the identifier of the first operation request 305 present in the new message; moreover, the applicative server effects an equality check between the session identifier contained in the first and in the second request message. Parallel to sending the first status forward message 366, if the applicative server 315 positively validated the ATP, in the meantime it has prepared the text-based request message 340 that is sent to the smartphone 210, with the contents described above. The text-based request message 340 indicates the identifier of the corresponding operation request message 305, i.e. the first, and is stored in specific persistent areas, for example mass memories connected to the applicative server 315; a reference to the corresponding file, together with the identifier of the request, of the timestamp and of the recipient user represented by his telephone number or unique identifier, are maintained within the database of said server 315, together with other data of the text-based request message 340, including plain text information corresponding to the hash if the base string is in hash form.

The applicative server 315 sends the text-based request message 340 on the basis of the telephone number of the recipient received in the first forwarded request message 308 or deduced from its own database on the basis of the unique identifier of the user 400 received in the first forwarded request message 308. In general, the methods of sending the message 340 reflect what has already been described with respect to the general case of Fig. 3a.

The request message 340 typically corresponds to a clear access request in natural language indicating the data present in the same message, visualized on the display 110 of the smartphone 210; if the base string is in hash form, the hash value is shown, always encoded preferably in hexadecimal notation or in base64. The qualified electronic signature application 220 asks to sign qualified electronic signature to the base string if this is a hash, otherwise on the hash of the whole message

340, as this hash is calculated by the application 220; i.e. according to the case, either on the hash coinciding with the base string visualized on the display 110 after decoding from the visualization format, typically hexadecimal/base64, or in the case of plain text base string, the hash is calculated by the application 220 on the plain text message 340 visualized on the display 110. The signature consists in the RSA encryption of the hash through a private key 201. Before the signature, the user 400 can compare in the case of base string coinciding with the hash, the ATP and the hash shown by the multi-functional application 220 respectively with the ATP entered by him by means of the supporting processor 303 or smartphone 100, as well as any other optional parameters.

In the case of plain text base string, the user 400 can compare the ATP and the identifier of the operation request 305 shown by the multi-functional application 220 respectively with the ATP entered by him on the requesting device 303 or 100 and the identifier of the operation request 305, again shown by means of the supporting processor 303 or smartphone 100, as well as any other optional parameters. In the case of further information being present in the text-based request message 340 and therefore on the display 110 of the smartphone 210, this is in any case also present on the graphic interface of the requesting processor 303 or smartphone 100, thus allowing the operator to check that the information present on the request and confirmation medium is congruent. If the data are congruent, the user can proceed with the detached qualified electronic signature.

With regard to the methods of calculating the hash, what was described above with reference to Fig. 3a applies, in particular with reference to the need to add any further information to the hash before the signature, following any additional requirements for the qualified electronic signature in the country of use. The confirmation message 345 is represented here by the detached qualified electronic signature effected on the aforesaid hash coinciding with the base string if this is in hash form or, otherwise, on the hash calculated by the application 220 on the message 340. The signature is accompanied by the unique identifier of the first subscription request 305 assigned previously by the front-end server 310.

The applicative server 315 verifies the signature contained in the confirmation message 345 retrieving the corresponding plain text information registered previously: the plain text information from which the hash was calculated if it was the base string; vice versa, the whole message 340 is retrieved. Moreover, the signature certificate associated with the telephone number in the database related to the user to whom the first operation request 305 was sent, and the related certificate of the Certification Authority, are retrieved.

If verification of the signature or of other checks fails, the applicative server 315 sends a specific recipient error status message 360 to the smartphone 210 and the specific error status forward message 366 to the front-end server 310, in response to the second forwarded request message 308. This sends requester error status 370 to the requester, in response to the second operation request message 305.

In the present example of application it is not necessary to effect an order request 350 to the server 330. With regard to the second requester status 370 what was described above with reference to Fig. 3a generally applies, as the user 400 in the role of recipient corresponds to the requester and considering however that in the second operation request 305 the e-mail address of the requester/recipient is not normally present. In the case of positive verifications, the requester status message 370 contains the indication for the interface server 302 to consider as authentic the user on the session initially indicated in the first and second operation request 305; therefore, the user 400 can visualize or access the sensitive data as his session on the interface server 302 is authorized for this. In substance, the user 400 effects login successfully.

Further information that can be managed by the interface server 302 consists of specification in operation requests 305 of specific information or authorization within the current session; in this way, a specific double operation request 305 can be effected, as in the aforementioned case; these operation requests 305 of access type are used to also allow access to this specific information or to confirm an order. For example, the value of the session set by the interface server 302, in the operation request 305, can contain the identifier of the particular action to be authorized or information to be accessed; in this case a double operation request 305 similar to the aforementioned one is managed, where the user code for the request step is optionally no longer requested from the user as it is known to the interface server 302; typically, only an ATP is requested from the user graphic interface.

For the other aspects not described here, the system operates in the same manner as described for the system operating with the architecture of Fig. 3a.

It is also possible to use the same procedure described here without using the ATP. The method of making secure through any temporary password can be used for access to home or mobile banking, as well as for access to any service/website. In the case of home-mobile banking, the applicative server 315 is typically installed within the network of the bank. Comparison between temporary passwords and the other information present both on the requester side and the recipient side, is preferably implemented by the user 400. It is naturally possible, in particular, for the user 400 to use as terminal for the request and for the signature a smartphone 210 for qualified electronic signature, using for the request step its functions of a smartphone 100; in this case the aforesaid comparison can be effected through a specific application software or the same application.

It is also possible to integrate the request within the same application 220, and in this sense it is possible to extend performing the request through the interface server 302 to the smartphone 210. The application software, if visualization takes place on two different processors, can, for example, make use of a short-distance communication channel, for example Bluetooth, through use on the smartphone 210 of the optional wireless connection module 121 or similar in the case of processors 303 or smartphones 100, such as those used by the client messages 351 and 352 described hereinafter, in this case for automatic comparison.

Again to effect login to a network service or authorize an order, it is also possible to already initially visualize the session identifier on the device 303 or 100 through communication with the interface server and promote thereon an operation request 305 without reference to the user involved; in this case the smartphone 210 is used immediately in an active manner without the use of the text-based message 340, by the user 400 entering the session identifier on the application 220 and performing the attached signature thereon, sending it with a confirmation message 345 to the applicative server 315; if necessary, the message is complete with identifier of the user in the dedicated network or serial number of the certificate with related identifier of the certificate of the Certification Authority that issued it, or upon receiving the confirmation message 345 the user is deduced from the telephone number, if this is an SMS text message. The applicative server 315, after verifying the signature using the certificates present in its own database associated with the user, sends the identifier of the signatory or telephone number with the session through a status forward message 366 to the interface server 302; the interface server 302 with requester status message 370 receives the identifier or telephone number of the user and completes the login or the order requested on the device 303 or 100. It is also possible to add the username or telephone number or identifier of the dedicated network in the initial step on the device 303 or 100; in this case the information on the user for the session indicated is present in the message 305 until it reaches the applicative server 315: with the restriction that it is not possible for a given user to activate more than one login simultaneously, the message 345 may not contain the plain text information on the session as it is already present associated with the user on the server 315, and carry with it the detached signature and if necessary the user identifier in the dedicated network or the aforesaid information on the certificates, or once again the user telephone number is deduced from the applicative server 315 if it is an SMS text message. In this use of the dedicated network for access or for orders it is also possible to add the ATP on the device 303 or 100 at the start of the procedure, triggering recalculation of the session identifier that appears on the related display; if necessary, the ATP information reaches the applicative server 315 to which the user sends a first message 345 with indication of the session visualized on the device 303 or 100 and receives the ATP in response with a recipient status message 360; if the two ATPs are the same, it promotes a further signature message 345 as indicated above.

It must be noted that the procedure with any temporary password described above can, if necessary, also be used in qualified electronic signature systems that make use of a private key 201, which however is not stored in a security memory 200.

Moreover, the signature procedure through the use of an ATP described with reference to the systems according to the present invention, can also be used with different systems, configuring an electronic signature or qualified electronic signature procedure according to which after visualization of a session identifier on the first processing means, the requester and recipient user 400 enters this identifier on the application 220 of the second processing means 210 and signs a signature thereon through the application 220, sending it by mean of a confirmation message 345 so that the applicative server 315 can identify the signatory user through verification of the signature, supply this information by means of status forward message 366 to the interface server 302 which communicates with the first processing means 303 (or 100 or 210) to allow the user, if registered on the interface server 315, to effect an order or access a further page on the first processing means, also being able to receive on the second processing means 210 before said signature, this ATP if previously entered on the first processing means 303 (or 100 or 210).

A further embodiment relates to payments and subscriptions implemented according to one of the architectures in Figs. 3a, 3b, 4 and accesses according to the architecture in Fig. 4, as illustrated with reference to the architecture of Fig. 7. The recipient status message 360 is depicted with a dashed line as it could be absent and substituted by another message, as indicated hereinafter. In this embodiment, the text-based request message 340 can be substituted by a message sent by the client processor 303, as depicted in Fig. 7, which can alternatively be substituted by a smartphone 100 or 210, and directed to the smartphone 210 of the subscriber. The requester 300 in Fig. 7 can be substituted by the requester coinciding with the recipient 400, and the recipient 365 in Fig. 7 can also be substituted by the requester coinciding with the recipient 400.

The interface server 302 is depicted with a dashed line as it may not be present if the request is effected from the smartphone 210. In this context, each of the payment operation request messages 305 and subscription operation request messages 305 subsequent to upload, and the first of the two operation request messages 305 of access type, is now substituted by two new operation request messages 305 in succession. The two new operation request messages 305, each with its own identifier, are in general linked so that the identifier of the first is indicated among the data in the second. In the case of accesses, a further operation request 305 follows, as in the embodiment described previously. The first new type of operation request message 305 through the messages and the servers described in the previous embodiments, besides being processed as in the previous cases, can, if necessary, contain indication of the requesting device 303 or 100 or 210 through an identifier, if possible unique. The operation request 305, after reaching the applicative server 315, also achieves the effect of having the applicative server 315 sent the same information that would have been contained in the text-based request message 340, with indication of the telephone number of the recipient and, if necessary, of the identifier of the requester device, through the status forward message 366, which through the requester status message 370 reaches the processor 303 or smartphone 100. In this case the applicative server 315 in any case waits for the message containing the signature, associated with the first request. The requester status message 370 updates the wait status of the signature of the subscriber on the device 303 or 100 or 210 that effected the request; if the request effected is of the access type, the data for updating the graphic interface of the processor 303 or 100 are deduced from the requester status message 370, as described previously. In general, the message 370 contains the information directed to the smartphone 210 of the recipient and therefore it, or part of it, being transferred through the requesting device 303 or 100 or 210, can be visualized on the related graphic interface of the request device when the message 370 is received. For example, the hash to be subscribed can be presented on this graphic interface also for payments or subscriptions, to allow a further check by the user.

The requesting processor 303 or the smartphone 100 or 210 also sends the information received to the smartphone 210 of the recipient so that he/she can sign his signature. The transmission between processor 303 or smartphone 100 and smartphone 210 typically takes place through alternative technologies to the SMS text message and typically by the wireless module 121 trough wireless network (for example Bluetooth or NFC or Wi-Fi or QR-code) or Internet data traffic. In the presence of the identifier of the request device in the operation request 305, this indication is also present among the data of the message 351 and therefore can also be checked by the application 220 of the recipient's smartphone 210, on the basis of the sender detected for the message 351. To be identified by the requesting device 303, 100 or 210, the recipient's smartphone 210 can, for example, be identified through the identifier of the recipient within the dedicated network, or his telephone number, or other additional identifier present in the database of the applicative server 315, contained in the status forward message 366 and therefore in the requester status message 370, the content of which therefore becomes available to the requester device. A client request message 351 is therefore sent to the smartphone 210 by the requesting device 303, 100 or 210. Likewise, the processor 303 or smartphone 100 or 210 must be enabled for this receipt/transmission.

The signature through the smartphone 210 takes place as already described in the previous cases and the confirmation message 345 can be substituted by analogous client confirmation message 352, sent to the processor 303 or smartphone 100 or 210 that effected the request, typically through the optional wireless connection module 121. In this context, the processor 303 or the smartphone 100 or 210 sends the message received through a second operation request 305, adapted to send the signature to the applicative server 315 in substitution of the confirmation message 345; the second operation request 305 presents among the data the identifier of the first operation request 305 described above. The second operation request 305 involves an analogous status forward message 308, received by the applicative server 315. Due to the presence, among the data of said message, also of the identifier of the first request, the applicative server 315 associates the second message with the first which is waiting for confirmation and whose data were registered, and the process continues as in the other embodiments. The recipient status message 360 can be sent from the applicative server 315 or substituted by analogous message sent through the optional wireless connection module 121 from the processor 303 or smartphone 100 or 210, upon receiving the requester status message 370 related to the second operation request 305. In the case of synchronous transmission, the smartphone 210 sends the message confirming receipt to the requesting device 303 or 100 or 210. It is possible to add the ATP also for payments and subscriptions and this can be entered on the processor 303 or smartphone 100 or 210 together with other data of the request and compared by the user with that indicated through the client request message 351 on the smartphone 210.

Moreover, the smartphone 100 from which the request can be effected can coincide physically with the same smartphone 210 of the recipient, but does not directly use, for the request step, the functions made available by the security memory 200 and by the qualified electronic signature application 220, and interrogates the qualified electronic signature application 220 by means of another application; in this context the messages 351 and 352 can be represented, for example, by TCP/IP transmission, where the requesting application sends messages 351 to the qualified electronic signature application 220, which responds with the messages 352.

In a further variant of the embodiment described above, with respect to this latter, it is possible to calculate the data obtained from the first operation request 305 through the requester status response 370 in another manner; the alternative consists in not performing the first operation request 305, and in calculating this by means of the smartphone 210 or processor 303 or smartphone 100 of the requester, through the application 220 in the first case and through a different application in the case of processor 303 or smartphone 100. In the case of access request, the information related to the session identifier, if necessary combined with the identifier of an action to be authorized, is present on the graphic interface of the requesting device, and this information is available to the same device and is included in the plain text information coinciding with the base string or from which the hash to set equal to the base string is calculated. Typically, the optional wireless connection module 121 is used. In this context for all types of requests the identifier of the operation request 305 and the timestamp are defined by the application that sends the request, and must then be validated by the front-end server 310, as described previously in the other embodiments. In the case of access request, the identifier of the operation request 305 calculated is visualized on the graphic interface of the requester. The requesting device 303 or 100 or 210 requests the signature on the smartphone 210 of the recipient through the message 351, indicating in the case of accesses typically also the session identifier. In general, not only for accesses, in response the smartphone 210 of the recipient sends a message 352 containing the qualified electronic signature, as described previously. The requesting device 303 or 100 or 210 then sends an operation request 305, complete with the qualified electronic signature obtained. The process continues as previously described, considering that the signature is already available to the applicative server 315 when the status forward message 308 reaches it, without the need to obtain it through other messages.

In a further embodiment, it is possible to create the private key 201 on the security memory 200 and the certificate, before the subscription step of a contract by a client with a dealer, to subscribe the contract already with qualified electronic signature and save the dealer and the organization for whom the dealer works from having to manage the paper copy of the contract and of the subsequent documents exchanged with the client. These can be dealers that operate as registration operators for a Certification Authority, on behalf of a telephone operator to issue SIM cards or that operate to open a bank account on behalf of a bank; in any case, the client can be the digital subscriber with qualified electronic signature of the contract and any other documents. In particular, the customer can advance a form via Internet for requesting the certificate, providing also his phone number, email address, and general identification of the identity document, references to any banks connected with dedicated network relating to application signature 220 at which the customer has a bank account, and getting so reservation at a dealer for the physical recognition. Meanwhile, a security memory or a dongle or other secure device is sent from said dealer or the applicant address, then the dealer will physically recognize the customer and validate the data provided by the system, the customer presenting documents provided with identity. The dealer can check the phone number of the customer such as sending through the application of recording an SMS message to the customer and verifying the actual receipt by the relevant smartphone. In the case of qualified electronic signature of the dealer he prints paper copies of the certificate request contract automatically generated by the system for recording and showing the data entered by the customer first, and also dealer and customer will sign the document on paper, in the case of controls with positive outcome. The dealer will receive a subscription request similar to electronic document through the smartphone 210. The procedure provides a unique code to the client, for example via SMS or it is shown on the display of the dealer and read by the customer. The customer can make the certificate request according to the standard PKCS10 (or similar) by inserting nationality, through social security number or identification of the identity and access code obtained by the dealer, the multifunctional application 220, placing the memory dongle or device certified or received by the dealer or his address. On this device, the customer will create the private key safely through the application 220. The customer may pay the dealer for the hardware received and/or recognition made. The data provided by the customer will also be used for recording from the dedicated network connected with the application of signature 220. If the customer wishes to operate through one or more banks defined in registration, he will agree with them about the default mode of payment (bank, credit card, etc...), the bank already knowing all the necessary data. Alternatively, he can provide such as the number and details of the credit card during the registration at the dealer and the dealer may be controlling them if required by the procedure. Alternatively, the customer can send these details through the application 220, once you get the signing certificate.

In the embodiments described above, a single applicative server 315 has been considered for a given type of request and user belonging to the system according to the invention. However, it would be possible to have a plurality of applicative servers for type of request and user belonging to the system according to the invention. The system according to the invention normally provides only one front-end server 310 service, although there could be more than one.

For example, it would be possible to have a service of the front-end server 310 and the recipient user of the requests is registered there. The interface server 302 to which the requester 300 or the requester coinciding with the recipient 400 is connected, is connected to this front-end server 310. The recipient user 365 or the recipient coinciding with the requester 400 of the system according to the invention who receives the requests is registered on the front-end server 310 with his telephone number or unique identifier and the addresses of the applicative servers with which the recipient user is registered for each type of request.

Following a request coming from the requester (separate or the same as the recipient), the interface server 302 can connect with the front-end server 310 specifying the applicative server 315 of the recipient user to be considered for the transaction, if this information is known to the same interface server 302 or to the requester that added this information to the request. For example, if the interface server is a home banking website, it knows the address/reference of the applicative server on which the bank is based to manage, for example, access requests to the same home banking service. If this information is not known to the requester 300 or to the interface server 302, there are two possibilities:
- it is possible for the requester 300 or the interface server 302 to send a request for one particular operation request 305 of info-list type through the interface server 302 to learn the list of enabled applicative servers, obtaining this information by means of the requester status message 370. Management of these messages only involves the front-end server 310 and is not propagated to the other network nodes. With a subsequent request, the requester and the interface server can set the applicative server in the same request to be sent to the recipient.
- otherwise the requesting user and the interface server 302 send the request to the front-end server 310 without specifying this information.

If the recipient user is registered on the front-end server for a plurality of applicative servers for the type of request, the applicative server 315 indicated, on the front-end server, as the default applicative server related to the type of request considered and to the user considered is considered by the front-end server. The user, with registration procedure to the dedicated network can indicate, for each type of request, which is the default applicative server. If there is only one applicative server for the particular type, it is considered default.

In the case of requests effected by the qualified electronic signature application 220 with requester coinciding with the recipient, as illustrated, for example, in Figs. 5 and 6, it is also possible to save the list of the applicative servers locally on the multi-functional application 220 according to the type, to be able to specify the applicative server in the request.

In the case of payments implemented by the requester separate from the recipient, typically the requester 300 does not know the banking institution of the recipient 365, nor the related reference of the applicative server/s 315, but only knows the telephone number or identifier within the system according to the invention. Therefore, in this case the payment operation request 305 typically does not contain indication of the applicative server of the recipient. The recipient 365 is therefore reached by a text-based request message 340 related to the default application service 315, i.e. typically from the application service of one of the banks of which he/she is a client.

In the case of payments implemented by a user 400 that is requester and recipient, as described, for example, with reference to Figs. 4, 5, 6 and 7, he/she can easily specify the applicative server 315 to be considered in the request. In this way, he/she can implement the payment requesting that the operation takes place through a specific bank, among any different banks with which he/she registered in the dedicated network, being able to specify the applicative server 315 in the operation request 305. Otherwise, the operation will take place through the default applicative server 315.

In the embodiments concerning the document subscription, if the operation request 305 to be signed digitally for document subscription is effected by a requester 300 through an interface server 302 that also offers the service of the applicative server 315, the reference of the applicative server 315 can easily be specified in the subscription request by the interface server 302. For example, this can be the case of a request effected by a company to a manager thereof, as recipient 365, invited to subscribe a formal authorization and who at the same time is provided with the applicative server 315. If it is the recipient user who also effects the request, it is probable that he/she knows the reference of the applicative server 315 or this reference can be added by the interface server 302. Naturally, also in this case in the absence of information on the applicative server the default one is used.

In the examples of embodiment relating to access to network services, the user 400 who is requester and recipient at the same time, likewise probably knows the reference of the applicative server 315 to be entered in the operation request 305. More simply, the interface server 302 that is specific to a certain service, after receiving the generic request by the user 400, adds the data relating to the applicative server 315 in the operation request 305 to the front-end server. In the case of accesses to the network services, it is possible to remove the default concept, in the case in which the applicative servers registered for the user are more than one in the front-end server.

The SMS text messages used can be sent through the Internet in an independent manner from telephone carriers, for example using the SKEBBY system, or can be sent through their networks. A SIM card, corresponding to the telephone number of the user, is in any case required to receive the request messages on the smartphone.

The use of SMS text messages allows a confirmation request to be received on the smartphone without the user having to remain on hold incurring possible data traffic charges. In place of SMS text messages, e-mail messages can be used through the optional wireless connection module 121, if the user has agreed to the system with this option, particularly useful in the case of use of smartphones provided with push e-mail mechanism, such as BlackBerry devices.

All the messages can by encrypted, in particular messages addressed to the smartphone 210 of the system can be encrypted with the public key of the certificate of the user linked to a particular telephone number. In fact, the certificate is known to the applicative server and upon receiving the message on the smartphone it is possible, to decrypt the same message, to use the PIN code to activate the private key 201 and implement decryption. The private key 201 for decryption, the related public key and certificate can potentially be different than those of the signature; in this case the additional certificate is registered in the database of the applicative server.

For increased security, all the messages, especially those received by the smartphone 210 and sent to this by the applicative server 315, can also be signed with qualified electronic signature implemented by the applicative server 315 through a mass and remote signature device of the HSM (Hardware Security Module) type, certified according to the requirements of the national and international provisions for qualified electronic signature; in this case the signature PIN code on the HSM is entered by a manager of the applicative server 315 connected with said HSM which promotes a mass signature process of the outgoing text-based request messages 340; in this case the multi-functional application 220 is provided with the digital certificate corresponding to the signature private key present on the HSM, and to the certificate of the Certification Authority that issued it.

Through this certificate, the multi-functional application 220 can verify the signature received and validate it as sent by the applicative server considered associated in the multi-functional application with the service used.

Also the client request messages 351 and client confirmation messages 352 can be signed and/or encrypted, as all messages between the other server and client nodes of the dedicated network can. In general, the content of the messages can be signed or encrypted, or first signed and then encrypted.

Normally, the signature certificate and the signature private key 201 for a given user are unique in the dedicated network; the same signature certificate is copied onto the applicative servers used by the user, but in this context of qualified electronic signature, as the certificate is public by definition and does not contain the private key, this does not imply a security problem. It is also possible to define pairs of certificates and separate signature private keys, on the basis of the applicative server. In this case a plurality of private keys are present on the smartphone, to be selected at the time of entering the signature PIN code.

After the signature operation has been implemented, the message sent by the smartphone can also contain the Serial Number of the signature certificate and indication of the related Certification Authority, extracted from the qualified electronic signature application 220 by the security memory to allow a further control of the certificate by the server.

The security memory can, if necessary, be housed in another reader connected to the smartphone, with respect to the one often incorporated with the same smartphone. The reader can, for example, be placed within a case that also contains the smartphone or connected through an available input/output interface, such as the headphone and microphone port. It is also possible to consider the use, within the dedicated network, of different private key repositories with respect to the security memory, which are, for example, embedded in the mobile telephone, or connected thereto or which coincide with the SIM. Depending on the configuration multifunctional application 220, it can search for the most secure repository, built-in or connected with the smartphone, in terms of unremovability of the data of the private key and execution of the RSA algorithm, in the absence of the certified memory. In contexts in which the use of the qualified electronic signature or of the equivalent qualified electronic signature is not required, it is possible to use non-certified private key repositories for the qualified electronic signature, hash algorithms different from those required for the qualified electronic signature, and preliminary de visu recognition of the user can be avoided.

The solution described above has various advantages with respect to the prior art.

The signature system and signature procedure according to the invention advantageously allow, through the use of the security memory, in connection with a mobile telephone device and a qualified electronic signature network, protection of the private key 201 against copying and extraction, and the use of this private key for the qualified electronic signature to allow the user to subscribe documents, order payments and access information services, in security and in mobility, the sensitive information also being protected at the level of applicative servers of the dedicated network, as these applicative servers are protected, and the information used within the dedicated network at the level of front-end server and interface server 302 instead not being sensitive. By adopting the RSA signature algorithm of asymmetric type and with the requirements for the qualified electronic signature, a high degree of security is achieved, such as to make this electronic signature legally equivalent to the handwritten signature in many national legal systems.

The security memory is advantageously installed on a removable medium and does not require agreements with telephone operators for its use, nor is it necessarily linked to the credit card circuit. The removable medium can be housed in the mobile telephone, which is configured to be connected typically via SMS (Short Message Service) to a dedicated telecommunications network for the signature operations based on a given architecture of server components within which the users of the system are registered. The architecture of the dedicated network, if necessary, allows the use of other storage devices to contain the private key.

Advantageously, the system makes use in the majority of the embodiments of a qualified electronic signature in detached form which is not included in the same message with the plain text information and therefore neither the corresponding plain text information nor the sensitive data can be extracted by a hacker. An exception to this are the embodiments, for example, according to the architecture of Fig. 6 where the operation request is signed at source before being sent. In general, no re-usable passwords, PIN codes or credit card numbers, in the case of e-commerce, are transferred on the network of the signature system proposed.

The signature itself cannot be copied and used again for different requests: in this case, the qualified electronic signatures used vary each time as also the associated plain text information changes each time; it is present on the applicative servers of the dedicated network and allows these to verify the signature received and thus authenticate the signatory user and verify whether signature relates to specific plain text information.

Naturally, without prejudice to the principle of the invention, the details of construction and the embodiments can vary widely with respect to those described and illustrated purely by way of example, without however departing from the scope of the present invention.

It is possible, in addition to the security memory, to consider the use, within the dedicated network, or other storage media, or private key repositories with respect to the security memory, which are, for example, embedded in the mobile telephone, or which are connected thereto, or which coincide with the SIM. In contexts in which the use of the qualified electronic signature or of the equivalent qualified electronic signature is not required, it is possible to use, for example, these non-certified private key repositories for the qualified electronic signature, different hash algorithms and encryptions from those necessary for the qualified electronic signature, if necessary avoiding preliminary de visu recognition of the user.

## Claims

1. A qualified electronic signature system configured to exchange data with first processing means (100; 303; 210) of a requester (300; 400) configured to allow said requester (300, 400) to generate in said system requests (305) related to a signer (365; 400) through said system, said system comprising second processing means (210) of the signer (365; 400) configured to allow said signer (365; 400) to sign with his qualified electronic signature, said second processing means (210) comprising a mobile phone device to allow said signer to sign with his qualified electronic signature of mobile type, adapted to receive (340) and to send (345) text-based communications on mobile telecommunication networks comprising one or more servers, or to receive (351) and to send (352) electronic data with proximity modules on proximity networks, on the basis of an identifier of said signer as subscriber of a mobile telephone service said identifier being comprised in a Subscriber Identity Module (120) with which said signer is associated, wherein:
said second processing means (210) comprise means (220) to perform said qualified electronic signature through a security memory (200) comprising at least a secure partition in which at least a private key (201) of said signer is stored, said electronic signature being performed in said security partition of said security memory certified for qualified electronic signature and to store said private key in an independent way with respect to said mobile telephone service, to said mobile telecommunication networks and to said Subscriber Identity Module (120), said security memory (200) being activated in order to perform a qualified electronic signature on the basis of an activation code inputted by said signer through said mobile phone device;
said security memory being different from said Subscriber Identity Module and being accessible by said mobile phone device in combination with said Subscriber Identity Module identifier of said signer with which said security memory is associated, when data is exchanged through said mobile telecommunication networks, or in combination of said electronic data (351, 352) when data is exchanged through said proximity networks,
said qualified electronic signature system also comprising a dedicated server network (302, 310, 315), different from said servers of said mobile telecommunication networks, to perform a communication between said first processing means (100; 303; 210) of the requester and said second processing means (210) of the signer;
said dedicated server network comprising at least:
• one front-end server (310) configured to receive, validate and dispatch said system requests (305), requiring said qualified electronic signature or containing said qualified electronic signature, to generate dispatched requests (308), said system requests (305) being sent by said first processing means (100; 303; 210)
• one or more applicative servers (315) configured to receive and validate said dispatched requests (308) and, when data are exchanged through said mobile telecommunication networks, to send also said text-based communications (340) on said mobile telecommunication networks;
said front-end server (310) being configured to send said dispatched request (308) to a respective applicative server (315) on the basis of the identifier of the signer (365; 400) or his telephone number, associated to said Subscriber Identity Module, and on the basis of the type of request (305);
said applicative server (315) being configured to forward said request (305) as text-based communication (340) on the mobile telecommunication network by said identifier of the subscriber of the mobile telephone service in said Subscriber Identity Module (120) to said second processing means (210), when data are exchanged through said mobile telecommunication networks;
said second processing means (210) being also configured (220) to:
• use said private key (201) in said security memory (200) and to sign with said qualified electronic signature by encryption of a hash of said text-based communication on the mobile telephone network (340), or by encryption of a hash of said electronic data (351) received through said proximity networks, or of parts thereof by means of said private key (201);
• send said signature to the application server (315) through a confirmation message (345), when data are exchanged through said mobile telecommunication networks, or send a message (352) to said first means of the requester, when data are exchanged through said proximity networks.

2. The system according to claim 1, **characterized in that** said confirmation message (345) is in the form of SMS (Short Message System) text message, or is in the form of electronic data (352) suitable to be exchanged in a proximity network, and said dispatched request (308) is forwarded as text-based communication (340) on the mobile telecommunication network in the form of SMS type text message.

3. The system according to claim 1 or 2, **characterized in that** said request (305) is a payment request or a document subscription request or an access or order request on network services, said request (305) containing said identifier of said signer.

4. The system according to one or more of the preceding claims, **characterized in that** said front-end server (310) is configured, in said validation operation, to add a variable part comprising at least one unique identifier and a timestamp of the request (305) or to validate said variable part and said timestamp if received in said request (305).

5. The system according to one or more of the preceding claims, **characterized in that** the mobile phone device (210) is configured to automatically show on the display (110) the text-based request (340) received and to send, after signing with said electronic signature, a detached qualified electronic signature, to the application server (315) to allow certified identification of the signer by means of a certificate in the applicative server (315) on the basis of the certificate of the Certification Authority that issued it, both certificates being associated with said signer,
or said mobile phone device (210) being also configured to automatically show on the display (110) the request (351) received, and to send, after signing with said electronic signature, a detached qualified electronic signature (352) to said first means of the requester to allow certified identification of the signer by means of a certificate in the applicative server (315) on the basis of the certificate of the Certification Authority that issued it, both certificates being associated with said signer user (365; 400).

6. The system according to one or more of the preceding claims, **characterized in that** said at least one front-end server (310) comprises a registered user database of the dedicated server network (302, 310, 315) and is configured to verify in said registered user database, the presence of the signer (365; 400) and information associated with said signer (365; 400), to route the request (305) to said respective applicative server (315) of the signer (365; 400).

7. The system according to claim 5 or 6, **characterized in that** said applicative server (315) is configured to verify said qualified electronic signature sent by the mobile phone device (210) and to activate transaction instructions determined on the basis of the type of request (305).

8. The system according to one or more claims from 5 to 7, **characterized in that** said applicative server (315) is configured to update a corresponding status of the operation on the front-end server (310) on the basis of the unique identifier of the operative request (305).

9. The system according to one or more of the preceding claims, **characterized in that** said first processing means of the requester are also configured as said second processing means (210), comprising a mobile phone device, suitable to exchange text-based communications on mobile telecommunications networks, or to exchange electronic data with proximity modules on proximity networks, on the basis of an
identifier of the subscriber of the mobile telephone service included in a Subscriber Identity Module (120) with which he is associated and means (220) for operating with a security memory comprising a secure partition in which a private key (201) is stored.

10. The system according to one or more of the preceding claims, **characterized in that** said first processing means (100; 303; 210) of the requester correspond to said second processing means (210) of the signer.

11. The system according to one or more of the preceding claims, **characterized in that** it comprises a computer provided with display means larger than the display means of said mobile phone device and **in that** said dispatched request (308) is also sent as e-mail message to an address which can be accessible to said signer, said e-mail message containing information, in particular an address reference, to visualize one or more documents associated with said dispatched request (308), in particular documents to be subscribed, on said larger display means.

12. The system according to one or more of the preceding claims, **characterized in that** said confirmation message (345) or the text-based message (340) or both said messages are respectively transmitted and received in the form of wireless communication through a wireless connection module (121), in particular as e-mail message or push message or other communication transmitted on the Internet.

13. The system according to one or more of the preceding claims, **characterized in that** it uses certificates issued by certification authorities associated with said dedicated server network (302, 310, 315) for an electronic signature procedure equivalent to the qualified electronic signature or an electronic signature procedure in general.

14. The system according to one or more of the preceding claims, **characterized in that** said second processing means (210) comprise one or more storage means for said private key, said storage means being different from said security memory (200) and, in particular, incorporated in, or connected to said second processing means (210) of the signer or embedded in the Subscriber Identity Module (120), certified or not certified for the qualified electronic signature, said means (220) to perform said electronic signature process being able to find and use the most secure storage means among said storage means on the basis of predefined warranty criteria to prevent the private key extraction and/or to execute the RSA algorithm in a secure way.

15. A qualified electronic signature procedure **characterized by** comprising the operations implemented by the qualified electronic signature system according to one or more of claims from 1 to 14.

16. The qualified electronic signature procedure according to claim 15 **characterized by** comprising:
in the request (305) entered in the first processing means (303; 100; 210) also a temporary password (ATP);
displaying a not hashed base string or an hashing of said base string and said temporary password on the second processing means of the signer(400);
displaying said not hashed base string or said hashing of said base string and said temporary password on the first processing means (303; 100; 210) of the requester, said method comprising in particular to compute by said applicative server (315) said not hashed base string or said hashing of said base string on the basis of the information of the request (305) and of said temporary password (ATP), and of further information comprising a session identifier on the interface server (302) corresponding to the identifier of the request (305).

17. A mobile phone device for qualified electronic signature, adapted to exchange text-based communications on mobile telecommunication networks, or to exchange electronic data with proximity modules on proximity networks, on the basis of an identifier of the subscriber of a mobile telephone service comprised in a Subscriber Identity Module (120) with which said subscriber is associated, comprising an operating system and means (220) for operating with a security memory comprising at least a secure partition in which at least a private key (201) of said subscriber is stored, said security memory being different from said Subscriber Identity Module and being accessible by said mobile phone device only in association with said Subscriber Identity Module identifier of said signer with which said security memory is associated, said mobile phone device being configured, through a dedicated software application executed in said operating system, to use said private key (201) in said security memory (200) and to sign with a qualified electronic signature by encryption of a request message (340) or data (351) or parts thereof by means of said private key (201), said mobile phone device being able to process said electronic signature in said security partition of said security memory by keeping said private key in an independent way with respect to said mobile telephone service, to said mobile telecommunication networks and to said Subscriber Identifier Module (120) on the basis of an activation code inputted by said signer through said mobile phone device.

## Patentansprüche

1. Qualifiziertes elektronisches Signatursystem, das so konfiguriert ist, dass es mit ersten Verarbeitungseinrichtungen (100; 303; 210) eines Anfragers (300; 400) Daten austauscht, die so konfiguriert sind, dass sie es dem Anfrager (300, 400) ermöglichen, in dem System Anfragen (305) zu erzeugen, die durch das System einem Unterzeichner (365; 400) übermittelt werden, wobei das System zweite Verarbeitungseinrichtungen (210) des Unterzeichners (365; 400) aufweist, die so konfiguriert sind, dass sie es dem Unterzeichner (365; 400) ermöglichen, mit seiner qualifizierten elektronischen Signatur zu unterzeichnen, wobei die zweiten Verarbeitungseinrichtungen (210) eine Mobiltelefonvorrichtung aufweisen, um es dem Unterzeichner zu ermöglichen, mit seiner qualifizierten elektronischen Signatur mobiler Art zu unterzeichnen, die darauf ausgelegt ist, textbasierte Nachrichten mobiler Telekommunikationsnetzwerke, die einen oder mehrere Server aufweisen, zu empfangen (340) und zu senden (345), oder elektronische Daten mit Proximity-Modulen in Proximity-Netzwerken auf der Grundlage eines Identifikators des Unterzeichners als Teilnehmer eines Mobiltelefondienstes zu empfangen (351) und zu senden (352), wobei sich der Identifikator in einem Subscriber Identity Module (120) befindet, das dem Unterzeichner zugeordnet ist, wobei:
die zweiten Verarbeitungseinrichtungen (210) Einrichtungen (220) aufweisen, um die qualifizierte elektronische Signatur durch einen Sicherheitsspeicher (200) durchzuführen, der zumindest eine sichere Partition aufweist, in der zumindest ein privater Schlüssel (201) des Unterzeichners gespeichert ist, wobei die elektronische Signatur in der Sicherheitspartition des Sicherheitsspeichers durchgeführt wird, die für die qualifizierte elektronische Signatur zertifiziert ist, und um den privaten Schlüssel unabhängig von dem Mobiltelefondienst, den mobilen Telekommunikationsnetzwerken und dem Subscriber Identity Module (120) zu speichern, wobei der Sicherheitsspeicher (200) aktiviert wird, um eine qualifizierte elektronische Signatur auf der Grundlage eines Aktivierungscodes durchzuführen, der von dem Unterzeichner durch die Mobiltelefonvorrichtung eingegeben wird;
wobei sich der Sicherheitsspeicher von dem Subscriber Identity Module unterscheidet und die Mobiltelefonvorrichtung in Kombination mit dem Subscriber-Identity-Module-Identifikator des Unterzeichners, dem der Sicherheitsspeicher zugeordnet ist, darauf zugreifen kann, wenn Daten durch die mobilen Telekommunikationsnetzwerke ausgetauscht werden, oder in Kombination der elektronischen Daten (351, 352), wenn Daten durch die Proximity-Netzwerke ausgetauscht werden,
wobei das qualifizierte elektronische Signatursystem auch ein Dedicated-Server-Netzwerk (302, 310, 315) aufweisen, das sich von den Servern der mobilen Telekommunikationsnetzwerke unterscheidet, um eine Kommunikation zwischen den ersten Verarbeitungseinrichtungen (100; 303; 210) des Anfragers und den zweiten Verarbeitungseinrichtungen (210) des Unterzeichners durchzuführen; wobei das Dedicated-Server-Netzwerk zumindest Folgendes aufweist:
• einen Frontend-Server (310), der so konfiguriert ist, dass er die Systemanfragen (305) empfängt, validiert und abschickt, die die qualifizierte elektronische Signatur benötigen oder enthalten, um abgeschickte Anfragen (308) zu erzeugen, wobei die Systemanfragen (305) durch die ersten Verarbeitungseinrichtungen (100; 303; 210) gesendet werden;
• einen oder mehrere geeignete Server (315), die so konfiguriert sind, dass sie die abgeschickten Anfragen (308) empfangen und validieren und, wenn durch die mobilen Telekommunikationsnetzwerke Daten ausgetauscht werden, auch die textbasierten Nachrichten (340) in den mobilen Telekommunikationsnetzwerken senden;
wobei der Frontend-Server (310) so konfiguriert ist, dass er die abgeschickte Anfrage (308) auf der Grundlage des Identifikators des Unterzeichners (365; 400) oder seiner Telefonnummer, die dem Subscriber Identity Module zugeordnet ist, und auf der Grundlage der Art der Anfrage (305) an einen jeweils geeigneten Server (315) sendet;
wobei der geeignete Server (315) so konfiguriert ist, dass er die Anfrage (305) als textbasierte Kommunikation (340) in dem mobilen Telekommunikationsnetzwerk durch den Identifikator des Teilnehmers des Mobiltelefondienstes in dem Subscriber Identity Module (120) an die zweiten Verarbeitungseinrichtungen (210) weiterleitet, wenn durch die mobilen Telekommunikationsnetzwerke Daten ausgetauscht werden; wobei die zweiten Verarbeitungseinrichtungen (210) auch konfiguriert sind (220), um Folgendes auszuführen:
• um den privaten Schlüssel (201) in dem Sicherheitsspeicher (200) zu verwenden und durch Verschlüsselung eines Hashs der textbasierten Kommunikation in dem Mobiltelefonnetzwerk (340) oder durch Verschlüsselung eines Hashs der elektronischen Daten (351), die durch die Proximity-Netzwerke empfangen wurden, oder von Teilen davon mittels des privaten Schlüssels (201) mit der qualifizierten elektronischen Signatur zu unterzeichnen;
• um die Signatur durch eine Bestätigungsnachricht (345) an den Anwendungsserver (315) zu senden, wenn Daten durch die mobilen Telekommunikationsnetzwerke ausgetauscht werden, oder eine Nachricht (352) an die ersten Einrichtungen des Anfragers zu senden, wenn Daten durch die Proximity-Netzwerke ausgetauscht werden.

2. System nach Anspruch 1, **dadurch gekennzeichnet, dass** die Bestätigungsnachricht (345) in der Form einer SMS-(Short Message System)-Kurznachricht oder in der Form elektronischer Daten (352) vorliegt, die geeignet sind, in einem Proximity-Netzwerk ausgetauscht zu werden, und wobei die abgeschickte Anfrage (308) als textbasierte Kommunikation (340) in dem mobilen Telekommunikationsnetzwerk in der Form einer SMS-Textnachricht weitergeleitet wird.

3. System nach Anspruch 1 oder 2, **dadurch gekennzeichnet, dass** die Anfrage (305) eine Zahlungsanfrage oder eine Dokumentenunterschriftsanfrage oder eine Zugangs- oder Bestellanfrage bei Netzwerkdiensten ist, wobei die Anfrage (305) den Identifikator des Unterzeichners enthält.

4. System nach einem oder mehreren der vorgenannten Ansprüche, **dadurch gekennzeichnet, dass** der Frontend-Server (310) in dem Validationsvorgang so konfiguriert ist, dass er einen variablen Teil hinzufügt, der zumindest einen einzigartigen Identifikator und einen Zeitstempel der Anfrage (305) aufweist, oder so, dass er den variablen Teil und den Zeitstempel validiert, falls sie bei der Anfrage (305) empfangen werden.

5. System nach einem oder mehreren der vorgenannten Ansprüche, **dadurch gekennzeichnet, dass** die Mobiltelefonvorrichtung (2109 so konfiguriert ist, dass sie auf dem Display (110) automatisch die empfangene textbasierte Anfrage (340) zeigt, und dass sie nach dem Unterzeichnen mit der elektronischen Signatur eine abgekoppelte qualifizierte elektronische Signatur an den Anwendungsserver (315) sendet, um eine zertifizierte Identifikation des Unterzeichners mittels eines Zertifikats in dem Anwendungsserver (315) auf der Grundlage des Zertifikats der Zertifizierungsbehörde, die es ausgestellt hat, zu ermöglichen, wobei beide Zertifikate dem Unterzeichner zugeordnet sind,
oder wobei die Mobiltelefonvorrichtung (210) auch so konfiguriert ist, dass sie automatisch die empfangene Anfrage (351) auf dem Display (110) anzeigt, und dass sie nach dem Unterzeichnen mit der elektronischen Signatur eine abgekoppelte qualifizierte elektronische Signatur (352) an die ersten Einrichtungen des Anfragers sendet, um eine zertifizierte Identifikation des Unterzeichners mittels eines Zertifikats in dem Anwendungsserver (315) auf der Grundlage des Zertifikats der Zertifizierungsbehörde, die es ausgestellt hat, zu ermöglichen, wobei beide Zertifikate dem unterzeichnenden Nutzer (365; 400) zugeordnet sind.

6. System nach einem oder mehreren der vorgenannten Ansprüche, **dadurch gekennzeichnet, dass** der zumindest eine Frontend-Server (310) eine Datenbank registrierter Nutzer des Dedicated-Server-Netzwerks (302, 310, 315) aufweist und so konfiguriert ist, dass er in der Datenbank registrierter Nutzer das Vorhandensein des Unterzeichners (365; 400) und Informationen, die dem Unterzeichner (365; 400) zugeordnet sind, verifiziert, um die Anfrage (305) zu dem jeweils geeigneten Server (315) des Unterzeichners (365; 400) zu leiten.

7. System nach Anspruch 5 oder 6, **dadurch gekennzeichnet, dass** der geeignete Server (315) so konfiguriert ist, dass er die qualifizierte elektronische Signatur verifiziert, die durch die Mobiltelefonvorrichtung (210) gesendet wurde, und die Transaktionsinstruktionen aktiviert, die auf der Grundlage der Art der Anfrage (305) bestimmt wurden.

8. System nach einem oder mehreren Ansprüchen von 5 bis 7, **dadurch gekennzeichnet, dass** der geeignete Server (315) so konfiguriert ist, dass er einen entsprechenden Status des Vorgangs in dem Frontend-Server (310) auf der Grundlage des einzigartigen Identifikators der operativen Anfrage (305) aktualisiert.

9. System nach einem oder mehreren der vorgenannten Ansprüche, **dadurch gekennzeichnet, dass** die ersten Verarbeitungseinrichtungen des Anfragers auch so konfiguriert sind wie die zweiten Verarbeitungseinrichtungen (210), aufweisend eine Mobiltelefonvorrichtung, die geeignet ist, textbasierte Nachrichten in mobilen Telekommunikationsnetzwerken auszutauschen oder elektronische Daten mit Proximity-Modulen in Proximity-Netzwerken auf der Grundlage eines Identifikators des Teilnehmers des Mobiltelefondienstes, der in einem Subscriber Identity Module (120) enthalten ist, das ihm zugeordnet ist, auszutauschen, und Einrichtungen (220) zum Betreiben mit einem Sicherheitsspeicher, der eine sichere Partition aufweist, in der ein privater Schlüssel (201) gespeichert ist.

10. System nach einem oder mehreren der vorgenannten Ansprüche, **dadurch gekennzeichnet, dass** die ersten Verarbeitungseinrichtungen (100; 303; 210) des Anfragers den zweiten Verarbeitungseinrichtungen (210) des Unterzeichners entsprechen.

11. System nach einem oder mehreren der vorgenannten Ansprüche, **dadurch gekennzeichnet, dass** es einen Computer aufweist, der über eine Displayeinrichtung verfügt, die größer ist als die Displayeinrichtung der Mobiltelefonvorrichtung, und dadurch, dass die abgeschickte Anfrage (308) auch als E-Mail-Nachricht an eine Adresse gesendet wird, auf die der Unterzeichner zugreifen kann, wobei die E-Mail-Nachricht Informationen enthält, genauer ausgedrückt eine Adressenreferenz, um eines oder mehrere Dokumente auf der größeren Displayeinrichtung zu visualisieren, die der abgeschickten Anfrage (308) zugeordnet sind, genauer ausgedrückt Dokumente, die unterschrieben werden sollen.

12. System nach einem oder mehreren der vorgenannten Ansprüche, **dadurch gekennzeichnet, dass** die Bestätigungsnachricht (345) oder die textbasierte Nachricht (340) oder beide Nachrichten jeweils in Form von drahtloser Kommunikation durch ein Drahtlosverbindungsmodul (121) übertragen und empfangen werden, genauer ausgedrückt als eine E-Mail-Nachricht oder Push-Nachricht oder eine andere über das Internet übertragene Nachricht.

13. System nach einem oder mehreren der vorgenannten Ansprüche, **dadurch gekennzeichnet, dass** es für eine elektronische Signaturprozedur, die der qualifizierten elektronischen Signatur oder einer elektronischen Signaturprozedur im Allgemeinen entspricht, Zertifikate verwendet, die durch Zertifizierungsbehörden ausgestellt werden, die dem Dedicated-Server-Netzwerk (302, 310, 315) zugeordnet sind.

14. System nach einem oder mehreren der vorgenannten Ansprüche, **dadurch gekennzeichnet, dass** die zweiten Verarbeitungseinrichtungen (210) eine oder mehrere Speichereinrichtungen für den privaten Schlüssel aufweisen, wobei die Speichereinrichtungen sich von dem Sicherheitsspeicher (200) unterscheiden und, im Besonderen, in die zweiten Verarbeitungseinrichtungen (210) des Unterzeichners eingebaut oder mit diesen verbunden sind oder in das Subscriber Identity Module (120) eingebettet sind, wobei sie für die qualifizierte elektronische Signatur zertifiziert oder nicht zertifiziert sind, wobei die Einrichtungen (220), die dazu dienen, den elektronischen Signaturvorgang durchzuführen, in der Lage sind, die sicherste Speichereinrichtung unter den Speichereinrichtungen auf der Grundlage der vordefinierten Anspruchsvoraussetzungen zu finden und zu verwenden, um die Extrahierung des privaten Schlüssels zu verhindern und/oder den RSA-Algorithmus auf sichere Weise auszuführen.

15. Qualifizierte elektronische Signaturprozedur, **dadurch gekennzeichnet, dass** sie die Vorgänge aufweist, die durch das qualifizierte elektronische Signatursystem nach einem oder mehreren der Ansprüche 1 bis 14 durchgeführt werden.

16. Qualifizierte elektronische Signaturprozedur nach Anspruch 15, **dadurch gekennzeichnet, dass** sie Folgendes aufweist:
ein während der Anfrage (305) in die ersten Verarbeitungseinrichtungen (303; 100; 210) eingegebenes temporäres Passwort (ATP);
Zeigen einer nicht-gehashten Zeichenfolge oder eines Hashens der Zeichenfolge und des temporären Passworts in den zweiten Verarbeitungseinrichtungen des Unterzeichners (400);
Zeigen der nicht-gehashten Zeichenfolge oder des Hashens der Zeichenfolge und des temporären Passworts in den ersten Verarbeitungseinrichtungen (303; 100; 210) des Anfragers, wobei das Verfahren im Besonderen das Berechnen der nicht-gehashten Zeichenfolge oder des Hashens der Zeichenfolge auf der Grundlage der Information der Anfrage (305) und des temporären Passworts (ATP) durch den geeigneten Server (315), und von weiteren Informationen, die einen Sitzungsidentifikator auf dem Schnittstellenserver (302) aufweisen, die dem Identifikator der Anfrage (305) entsprechen, aufweist.

17. Mobiltelefonvorrichtung für die qualifizierte elektronische Signatur, darauf ausgelegt, auf der Grundlage eines Identifikators des Teilnehmers eines Mobiltelefondienstes, der sich in einem Subscriber Identity Module (120) befindet, dem der Teilnehmer zugeordnet ist, textbasierte Nachrichten in mobilen Telekommunikationsnetzwerken auszutauschen, oder elektronische Daten mit Proximity-Modulen in Proximity-Netzwerken auszutauschen, aufweisend ein Betriebssystem und Einrichtungen (220) zum Betreiben mit einem Sicherheitsspeicher, der zumindest eine sichere Partition aufweist, in der zumindest ein privater Schlüssel (201) des Teilnehmers gespeichert ist, wobei sich der Sicherheitsspeicher von dem Subscriber Identity Module unterscheidet und die Mobiltelefonvorrichtung nur zusammen mit dem Identifikator des Subscriber Identity Module des Unterzeichners, dem der Sicherheitsspeicher zugeordnet ist, darauf zugreifen kann, wobei die Mobiltelefonvorrichtung durch eine dedizierte Softwareanwendung, die in dem Betriebssystem ausgeführt wird, so konfiguriert ist, dass sie den privaten Schlüssel (201) in dem Sicherheitsspeicher (200) verwendet und durch Verschlüsselung einer Anfragenachricht (340) oder Daten (351) oder Teilen davon mittels des privaten Schlüssels (201) mit einer qualifizierten elektronischen Signatur unterzeichnet, wobei die Mobiltelefonvorrichtung in der Lage ist, die elektronische Signatur in der Sicherheitspartition des Sicherheitsspeichers zu verarbeiten, indem der private Schlüssel im Verhältnis zu dem Mobiltelefondienst, den mobilen Telekommunikationsnetzwerken und dem Subscriber Identity Module (120) auf der Grundlage eines durch den Unterzeichner mittels der Mobiltelefonvorrichtung eingegebenen Aktivierungscodes unabhängig bleibt.

## Revendications

1. Système de signature électronique qualifié configuré pour échanger des données avec des premiers moyens de traitement (100 ; 303; 210) d'un demandeur (300 ; 400) configurés pour permettre au dit demandeur (300, 400) de générer dans ledit système des demandes (305) associées à un signataire (365 ; 400) par l'intermédiaire dudit système, ledit système comprenant des deuxièmes moyens de traitement (210) du signataire (365 ; 400) configurés pour permettre au dit signataire (365 ; 400) de signer avec sa signature électronique qualifiée, lesdits deuxièmes moyens de traitement (210) comprenant un dispositif de téléphone mobile pour permettre au dit signataire de signer avec sa signature électronique qualifiée de type mobile, conçu pour recevoir (340) et pour envoyer (345) des communications à base de texte sur des réseaux de télécommunications mobiles comprenant un ou plusieurs serveurs, ou pour recevoir (351) et pour envoyer (352) des données électroniques avec des modules de proximité sur des réseaux de proximité, sur la base d'un identifiant dudit signataire en tant qu'abonné d'un service téléphonique mobile, ledit identifiant étant compris dans un module d'identité d'abonné (120) auquel ledit signataire est associé, dans lequel :
lesdits deuxièmes moyens de traitement (210) comprennent des moyens (220) pour effectuer ladite signature électronique qualifiée par l'intermédiaire d'une mémoire de sécurité (200) comprenant au moins une partition de sécurité dans laquelle au moins une clé privée (201) dudit signataire est mémorisée, ladite signature électronique étant effectuée dans ladite partition de sécurité de ladite mémoire de sécurité certifiée pour une signature électronique qualifiée, et pour mémoriser ladite clé privée d'une manière indépendante par rapport au dit service téléphonique mobile, aux dits réseaux de télécommunications mobiles et au dit module d'identité d'abonné (120), ladite mémoire de sécurité (200) étant activée afin d'effectuer une signature électronique qualifiée sur la base d'un code d'activation entré par ledit signataire par l'intermédiaire dudit dispositif de téléphone mobile ;
ladite mémoire de sécurité étant différente dudit module d'identité d'abonné et étant accessible par ledit dispositif de téléphone mobile en combinaison avec ledit identifiant de module d'identité d'abonné dudit signataire auquel ladite mémoire de sécurité est associée, lorsque des données sont échangées par l'intermédiaire desdits réseaux de télécommunications mobiles, ou en combinaison avec lesdites données électroniques (351, 352) lorsque des données sont échangées par l'intermédiaire desdits réseaux de proximité,
ledit système de signature électronique qualifié comprenant également un réseau de serveurs dédiés (302, 310, 315), différent desdits serveurs desdits réseaux de télécommunications mobiles, pour effectuer une communication entre lesdits premiers moyens de traitement (100 ; 303 ; 210) du demandeur et lesdits deuxièmes moyens de traitement (210) du signataire ;
ledit réseau de serveurs dédiés comprenant au moins :
• un serveur frontal (310) configuré pour recevoir, valider et expédier lesdites demandes de système (305), nécessitant ladite signature électronique qualifiée ou contenant ladite signature électronique qualifiée, pour générer les demandes expédiées (308), lesdites demandes de système (305) étant envoyées par lesdits premiers moyens de traitement (100 ; 303 ; 210) ;
• un ou plusieurs serveurs d'application (315) configurés pour recevoir et valider lesdites demandes expédiées (308) et, lorsque les données sont échangées par l'intermédiaire desdits réseaux de télécommunications mobiles, pour envoyer également lesdites communications à base de texte (340) sur lesdits réseaux de télécommunications mobiles ;
ledit serveur frontal (310) étant configuré pour envoyer ladite demande expédiée (308) à un serveur d'application (315) respectif sur la base de l'identifiant du signataire (365 ; 400) ou de son numéro de téléphone, associé au dit module d'identité d'abonné, et sur la base du type de demande (305) ;
ledit serveur d'application (315) étant configuré pour réacheminer ladite demande (305) en tant que communication à base de texte (340) sur le réseau de télécommunication mobile par ledit identifiant de l'abonné du service téléphonique mobile dans ledit module d'identité d'abonné (120) vers lesdits deuxièmes moyens de traitement (210), lorsque des données sont échangées par l'intermédiaire desdits réseaux de télécommunications mobiles ;
lesdits deuxièmes moyens de traitement (210) étant également configurés (220) pour :
• utiliser ladite clé privée (201) dans ladite mémoire de sécurité (200) et signer avec ladite signature électronique qualifiée par un chiffrement d'un hachage de ladite communication à base de texte sur le réseau de téléphonie mobile (340), ou par un chiffrement d'un hachage desdites données électroniques (351) reçues par l'intermédiaire desdits réseaux de proximité, ou de parties de celles-ci au moyen de ladite clé privée (201) ;
• envoyer ladite signature au serveur d'application (315) par l'intermédiaire d'un message de confirmation (345), lorsque des données sont échangées par l'intermédiaire desdits réseaux de télécommunications mobiles, ou envoyer un message (352) aux dits premiers moyens du demandeur, lorsque des données sont échangées par l'intermédiaire desdits réseaux de proximité.

2. Système selon la revendication 1, **caractérisé en ce que** ledit message de confirmation (345) est sous la forme d'un message textuel de type SMS (Short Message System), ou est sous la forme de données électroniques (352) appropriées pour être échangées dans un réseau de proximité, et ladite demande expédiée (308) est réacheminée en tant que communication à base de texte (340) sur le réseau de télécommunication mobile sous la forme d'un message textuel de type SMS.

3. Système selon la revendication 1 ou la revendication 2, **caractérisé en ce que** ladite demande (305) est une demande de paiement ou une demande de signature d'un document ou une demande d'accès ou de commande à travers des services de réseau, ladite demande (305) contenant ledit identifiant dudit signataire.

4. Système selon une ou plusieurs des revendications précédentes, **caractérisé en ce que** ledit serveur frontal (310) est configuré, dans ladite opération de validation, pour ajouter une partie variable comprenant au moins un identifiant unique et un horodatage de la demande (305) ou pour valider ladite partie variable et ledit horodatage s'ils sont reçus dans ladite demande (305).

5. Système selon une ou plusieurs des revendications précédentes, **caractérisé en ce que** le dispositif de téléphone mobile (210) est configuré pour présenter automatiquement sur l'afficheur (110) la demande à base de texte (340) reçue et pour envoyer, après signature avec ladite signature électronique, une signature électronique qualifiée détachée, au serveur d'application (315) pour permettre une identification certifiée du signataire au moyen d'un certificat dans le serveur d'application (315) sur la base du certificat de l'autorité de certification qui l'a émis, les deux certificats étant associés au dit signataire, ou ledit dispositif de téléphone mobile (210) étant également configuré pour présenter automatiquement sur l'afficheur (110) la demande (351) reçue, et pour envoyer, après signature avec ladite signature électronique, une signature électronique qualifiée détachée (352) aux dits premiers moyens du demandeur pour permettre une identification certifiée du signataire au moyen d'un certificat dans le serveur d'application (315) sur la base du certificat de l'autorité de certification qui l'a émis, les deux certificats étant associés au dit signataire (365 ; 400).

6. Système selon une ou plusieurs des revendications précédentes, **caractérisé en ce que** ledit au moins un serveur frontal (310) comprend une base de données d'utilisateurs enregistrés du réseau de serveurs dédiés (302, 310, 315) et est configuré pour vérifier, dans ladite base de données d'utilisateurs enregistrés, la présence du signataire (365 ; 400) et d'informations associées au dit signataire (365 ; 400), pour acheminer la demande (305) vers ledit respectif serveur d'application (315) du signataire (365 ; 400).

7. Système selon la revendication 5 ou la revendication 6, **caractérisé en ce que** ledit serveur d'application (315) est configuré pour vérifier ladite signature électronique qualifiée envoyée par le dispositif de téléphone mobile (210) et pour activer des instructions de transaction déterminées sur la base du type de demande (305).

8. Système selon une ou plusieurs des revendications 5 à 7, **caractérisé en ce que** ledit serveur d'application (315) est configuré pour mettre à jour un correspondant état du fonctionnement sur le serveur frontal (310) sur la base de l'identifiant unique de la demande d'opération (305).

9. Système selon une ou plusieurs des revendications précédentes, **caractérisé en ce que** lesdits premiers moyens de traitement du demandeur sont également configurés en tant que dits deuxièmes moyens de traitement (210), comprenant un dispositif de téléphone mobile, approprié pour échanger des communications à base de texte sur des réseaux de télécommunications mobiles, ou pour échanger des données électroniques avec des modules de proximité sur des réseaux de proximité, sur la base d'un identifiant de l'abonné du service téléphonique mobile inclus dans un module d'identité d'abonné (120) auquel il est associé et des moyens (220) pour fonctionner avec une mémoire de sécurité comprenant une partition de sécurité dans laquelle une clé privée (201) est mémorisée.

10. Système selon une ou plusieurs des revendications précédentes, **caractérisé en ce que** lesdits premiers moyens de traitement (100 ; 303 ; 210) du demandeur correspondent aux dits deuxièmes moyens de traitement (210) du signataire.

11. Système selon une ou plusieurs des revendications précédentes, **caractérisé en ce qu'**il comprend un ordinateur pourvu de moyens d'affichage plus grands que les moyens d'affichage dudit dispositif de téléphone mobile, et **en ce que** ladite demande expédiée (308) est également envoyée en tant que message de courrier électronique à une adresse à laquelle ledit signataire peut accéder, ledit message de courrier électronique contenant des informations, en particulier une référence d'adresse, pour visualiser un ou plusieurs documents associés à ladite demande expédiée (308), en particulier des documents à signer, sur lesdits moyens d'affichage plus grands.

12. Système selon une ou plusieurs des revendications précédentes, **caractérisé en ce que** ledit message de confirmation (345) ou le message à base de texte (340) ou lesdits deux messages sont respectivement transmis et reçus sous la forme d'une communication sans fil par l'intermédiaire d'un module de connexion sans fil (121), en particulier en tant que message de courrier électronique ou message push ou autre communication transmise sur Internet.

13. Système selon une ou plusieurs des revendications précédentes, **caractérisé en ce qu'**il utilise des certificats émis par des autorités de certification associées au dit réseau de serveurs dédiés (302, 310, 315) pour une procédure de signature électronique équivalente à la signature électronique qualifiée ou une procédure de signature électronique en général.

14. Système selon une ou plusieurs des revendications précédentes, **caractérisé en ce que** lesdits deuxièmes moyens de traitement (210) comprennent un ou plusieurs moyens de mémorisation pour ladite clé privée, lesdits moyens de mémorisation étant différents de ladite mémoire de sécurité (200) et, en particulier, incorporés dans, ou connectés aux dits deuxièmes moyens de traitement (210) du signataire ou intégrés dans le module d'identité d'abonné (120), certifiés ou non certifiés pour la signature électronique qualifiée, lesdits moyens (220) pour effectuer ledit processus de signature électronique étant capables de trouver et d'utiliser les moyens de mémorisation les plus sécurisés parmi lesdits moyens de mémorisation sur la base d'un critère de garantie prédéfini pour éviter l'extraction de la clé privée et/ou pour exécuter l'algorithme RSA d'une manière sécurisée.

15. Procédure de signature électronique qualifiée, **caractérisée en ce qu'**elle comprend les opérations réalisées par le système de signature électronique qualifié selon une ou plusieurs des revendications 1 à 14.

16. Procédure de signature électronique qualifiée selon la revendication 15, **caractérisée en ce qu'**elle comprend :
dans la demande (305) entrée dans les premiers moyens de traitement (303 ; 100 ; 210) également un mot de passe temporaire (ATP);
l'affichage d'une chaîne de base non hachée ou d'un hachage de ladite chaîne de base et dudit mot de passe temporaire sur les deuxièmes moyens de traitement du signataire (400) ;
l'affichage de ladite chaîne de base non hachée ou dudit hachage de ladite chaîne de base et dudit mot de passe temporaire sur les premiers moyens de traitement (303 ; 100 ; 210) du demandeur, ledit procédé comprenant en particulier le calcul, par ledit serveur d'application (315), de ladite chaîne de base non hachée ou dudit hachage de ladite chaîne de base sur la base des informations de la demande (305) et dudit mot de passe temporaire (ATP), et d'autres informations comprenant un identifiant de session concernant le serveur d'interface (302) correspondant à l'identifiant de la demande (305).

17. Dispositif de téléphone mobile pour une signature électronique qualifiée, conçu pour échanger des communications à base de texte sur des réseaux de télécommunications mobiles, ou pour échanger des données électroniques avec des modules de proximité sur des réseaux de proximité, sur la base d'un identifiant de l'abonné d'un service téléphonique mobile compris dans un module d'identité d'abonné (120) auquel ledit abonné est associé, comprenant un système d'exploitation et des moyens (220) pour fonctionner avec une mémoire de sécurité comprenant au moins une partition de sécurité dans laquelle au moins une clé privée (201) dudit abonné est mémorisée ; ladite mémoire de sécurité étant différente dudit module d'identité d'abonné et étant accessible par ledit dispositif de téléphone mobile uniquement en association avec ledit identifiant de module d'identité d'abonné dudit signataire auquel ladite mémoire de sécurité est associée, ledit dispositif de téléphone mobile étant configuré, par l'intermédiaire d'une application logicielle dédiée exécutée dans ledit système d'exploitation, pour utiliser ladite clé privée (201) dans ladite mémoire de sécurité (200) et pour signer avec une signature électronique qualifiée par le chiffrement d'un message de demande (340) ou de données (351) ou de parties de celles-ci au moyen de ladite clé privée (201), ledit dispositif de téléphone mobile étant capable de traiter ladite signature électronique dans ladite partition de sécurité de ladite mémoire de sécurité en conservant ladite clé privée d'une manière indépendante par rapport au dit service téléphonique mobile, aux dits réseaux de télécommunications mobiles et au dit module d'identifiant d'abonné (120) sur la base d'un code d'activation entré par ledit signataire par l'intermédiaire dudit dispositif de téléphone mobile.
